# EUROPÄISCHE PATENTSCHRIFT

(11) **EP 4 171 997 B1**
(45) Veröffentlichungstag und Bekanntmachung des Hinweises auf die Patenterteilung: **25.02.2026**
(21) Anmeldenummer: 21730136.5
(22) Anmeldetag: 27.05.2021
(51) Int. Cl.: B60Q 1/26

(54) **VERFAHREN ZUM BETRIEB EINER BELEUCHTUNGSEINRICHTUNG FÜR EIN KRAFTFAHRZEUG, BELEUCHTUNGSEINRICHTUNG UND KRAFTFAHRZEUG**
METHOD FOR OPERATING A LIGHTING DEVICE OF A MOTOR VEHICLE, LIGHTING DEVICE AND MOTOR VEHICLE
PROCÉDÉ POUR FAIRE FONCTIONNER UN DISPOSITIF D'ÉCLAIRAGE D'UN VÉHICULE À MOTEUR, DISPOSITIF D'ÉCLAIRAGE ET VÉHICULE À MOTEUR

(30) Priorität: 25.06.2020 DE 102020116740
(43) Veröffentlichungstag der Anmeldung: 03.05.2023
(73) Patentinhaber: Audi AG, 85045 Ingolstadt (DE)
(72) Erfinder: THOMAS, Werner, 85126 Oberwöhr (DE); MAIER, Marc, 97903 Collenberg (DE); HÄUSSINGER, Christoph, 85072 Eichstätt (DE); HORN, Michael, 85049 Ingolstadt (DE); EHRLICHAUF, Daniel, 86633 Neuburg/Donau (DE); HEIDER, Stephan, 85139 Wettstetten (DE); BECKER, Alexander, 85137 Gungolding (DE)
(74) Vertreter: Lindner Blaumeier Patent- und Rechtsanwälte
(86) Internationale Anmeldenummer: PCT/EP2021/064131
(87) Internationale Veröffentlichungsnummer: WO 2021/259583

(56) Entgegenhaltungen:
- EP-A1- 3 934 935
- DE-A1- 102015 216 746
- DE-A1- 102016 101 103
- DE-U1- 202017 101 348
- JP-A- S5 744 543

## Beschreibung

Die Erfindung betrifft ein Verfahren zum Betrieb einer Beleuchtungseinrichtung für ein Kraftfahrzeug, wobei die Beleuchtungseinrichtung wenigstens eine Außenleuchte und eine Steuereinrichtung aufweist, wobei die Außenleuchte eine Leuchtfläche mit wenigstens zwei unabhängig ansteuerbaren, jeweils wenigstens eine Lichtquelle umfassenden Segmenten aufweist. Daneben betrifft die Erfindung eine Beleuchtungseinrichtung und ein Kraftfahrzeug mit einer solchen Beleuchtungseinrichtung.

Kraftfahrzeuge weisen üblicherweise eine Mehrzahl an Außenleuchten auf, die wenigstens teilweise zur besseren Sichtbarkeit des Kraftfahrzeugs bei Tag und/oder bei Nacht, zur Sichtverbesserung eines Insassen und/oder zur Signalgabe an andere Verkehrsteilnehmer ausgestaltet sind. Beispiele für derartige Außenleuchten sind Rückleuchten (auch Heckleuchten oder Schlussleuchten genannt), Tagfahrleuchten, Scheinwerfer, Bremslichter und Fahrtrichtungsanzeiger. Außenleuchten an Kraftfahrzeugen werden heute so ausgelegt, dass die gegebenenfalls lokalen bzw. länderspezifischen gesetzlichen Anforderungen an Lichtstärke, Anbauhöhe, Schaltlogiken und weitere Parameter, die zusammenfassend als Lichtwerte bezeichnet werden können, eingehalten werden.

Allerdings werden eine Vielzahl von Außenleuchten, insbesondere jene, die der besseren Sichtbarkeit durch andere Verkehrsteilnehmer zuträglich sind, auch als differenzierendes Gestaltungsmerkmal für Fahrzeughersteller und/oder Fahrzeugdesigner eingesetzt. Diese Entwicklung wurde insbesondere gefördert durch neue Konzepte von Außenleuchten, die Leuchtdioden (LEDs), organische Leuchtdioden (OLED) und/oder Laser nutzen. Diese Beleuchtungstechnologien zur Realisierung der Lichtquellen der Außenleuchte ermöglichen es, beispielsweise durch Gesetze gegebene Anforderungen an die Lichtfunktion, konkret die Lichtwerte, und Designanforderungen zu vereinen, um ein Maß geschneidertes Außenlichtdesign für Kraftfahrzeuge bereitzustellen.

Das bedeutet, aktuell für Kraftfahrzeug bekannte Außenleuchten sind so ausgelegt, dass sowohl die insbesondere gesetzlichen Anforderungen an die Lichtfunktionen, beispielsweise Tagfahrlicht oder Rücklicht, als auch die Komfort- und/oder Fahrassistenzfunktionen, beispielsweise blendfreies Fernlicht, Kurvenlicht und dynamisches Blinklicht, gemeinsam mit einer fixen optischen Gestaltung, also einem Design, umgesetzt werden können. Allerdings ist es im Zuge der steigenden Funktionsanreicherung und Digitalisierung nachteilig, dass mit bisherigen Beleuchtungseinrichtungen für Kraftfahrzeuge lediglich ein festes, vorgegebenes Lichtdesign ermöglicht wird. Das bedeutet, Designdifferenzierungen, insbesondere hinsichtlich des geometrischen Erscheinungsbildes einer Außenleuchte, werden über verschiedene Hardwarevarianten abgebildet, die verschieden angeordnete Lichtquellen und/oder unterschiedliche Arten von Lichtquellen nutzen. Dabei wird das optisch hochwertigste Design meist mit der höchsten Ausstattungsvariante gekoppelt.

EP 1 488 447 B1 beschreibt einen elektrisch beleuchteten Flammensimulator, der dekorativ oder aber auch als Warnmittel oder Notbeleuchtung im Straßenverkehr eingesetzt werden kann. Der Flammensimulator umfasst wenigstens zwei Lichtquellen, die zufällig, sequentiell oder halb-zufällig beleuchtet werden können, um einen flackernden und sich bewegenden Lichteffekt zu erzeugen, der einer echten Flamme entspricht.

US 2007/0183152 A1 betrifft eine animierte Lichtquelle, die eine Mehrzahl von Festkörperemittern und einen Steuerschaltkreis umfasst. Die Emitter können selektiv mit Energie versorgt werden, um die Erscheinung sich bewegenden Lichts innerhalb des erzeugten Strahls zu erzeugen.

US 8 378 781 B1 offenbart ein System zur Steuerung einer Lichterkette, wobei jedes Licht oder jede Gruppe von Lichtern einen zugeordneten Mikrocontroller aufweist. Nachdem eindeutige Identifikationsnummern verwendet werden, können Helligkeits- und Farbinformationen gezielt Lichtern zugeordnet werden.

Ein Verfahren zum Erzeugen eines Lauflichteffekts an einer Lichtleiterstruktur wird durch AT 512 544 A1 beschrieben. Die Lichtleiterstruktur soll dabei zumindest zwei Lichteinspeisepositionen mit jeweils zugeordneten Lichtquellen aufweisen, wobei der Lichtleiter zur Führung des eingespeisten Lichts sowie zur Abstrahlung von Licht aufgrund von an dem Lichtleiter ausgebildeten Störstellen eingerichtet ist. Die Helligkeit der einspeisenden Lichtquellen kann nach vorgebbaren Dimmkurven zeitabhängig gesteuert werden.

DE 10 2015 119 549 A1 betrifft ein Fahrzeug mit Blinkleuchten sowie ein Verfahren zur Erzeugung einer Richtungsanzeige für nachfolgenden Verkehr. Dabei wird vorgeschlagen, dass zur Erzeugung einer Richtungsanzeige für den nachfolgenden Verkehr zur Umfahrung des Fahrzeugs ein von einer ersten Blinkleuchte erzeugter optischer Wischeffekt und ein von einer zweiten Blinkleuchte erzeugter optischer Wischeffekt in dieselbe Wischrichtung erfolgen.

DE 10 2016 101 103 A1 offenbart eine leuchtende, prismatische Plakette für ein Fahrzeug, umfassend ein Gehäuse, in dem sich eine Lichtquelle befindet und das einen sichtbaren Teil aufweist. Mittels der Lichtquelle wird Licht in Richtung des sichtbaren Teils gerichtet. Von der Lichtquelle emittiertes Licht leuchtet mit mehreren Farben, was ein prismatisches Aussehen schaffen kann.

Ein Emblem für ein Kraftfahrzeug, umfassend ein Gehäuse mit einem sichtbaren Abschnitt und mehrere hinter dem sichtbaren Abschnitt angeordnete Lichtquellen, die konfiguriert sind, in versetzten Intervallen aufzuleuchten, ist aus DE 20 2017 101 348 U1 bekannt.

Der Erfindung liegt daher die Aufgabe zugrunde, eine Möglichkeit zur verbesserten Sichtbarkeit und zur Erweckung höherer Aufmerksamkeit für Außenleuchten eines Kraftfahrzeugs anzugeben.

Zur Lösung dieser Aufgabe sind bei einem Verfahren der eingangs genannten Art erfindungsgemäß die Merkmale des Anspruchs 1 vorgesehen.

Ein Ansteuerschema kann mithin als ein Ansteuerbild verstanden werden, das das Erscheinungsbild der Außenleuchte bestimmt, nachdem es bevorzugt angibt, welche Segmente der Leuchtfläche der Außenleuchte wie hell zu betreiben sind, das bedeutet, den einzelnen Segmenten, zumindest jenen, die leuchtend zu betreiben sind, werden Sollwerte für die Helligkeit (Sollhelligkeiten) zugeordnet. Die Ansteuerschemata verändern sich über die Zeit mit einem pseudorandomisierten oder randomisierten Anteil. Dabei kann sich die Pseudorandomisierung beziehungsweise Randomisierung besonders bevorzugt wenigstens auf Auswahl der leuchtend zu betreibenden Segmente und/oder bezüglich ihrer Helligkeit zu verändernden, also veränderlich leuchtend zu betreibenden, Segmente beziehen; in einigen Ausführungsbeispielen kann sich die Pseudorandomisierung beziehungsweise Randomisierung zusätzlich oder alternativ auf die Sollhelligkeiten beziehen. Allgemein kann gesagt werden, dass die Segmente vorzugsweise wenigstens teilweise dimmbar sind, das bedeutet, in ihrer Helligkeit durch die Steuereinrichtung steuerbar sind, indem diese Sollhelligkeiten des Ansteuerschemas vergibt.

Durch die zeitliche Veränderung mittels der zeitlichen Abfolge von Ansteuerschemata entsteht im Rahmen der vorliegenden Erfindung eine dynamische Lichtsignatur im Sinne einer zeitlichen Veränderung des Erscheinungsbilds der Außenleuchte, konkret ihrer Leuchtfläche. Während es grundsätzlich außerhalb der Erfindung denkbar sein mag, eine feste, vorgegebene beziehungsweise vorgebbare Abfolge von Ansteuerschemata zu verwenden, ist für eine besonders dynamische, ansprechende und Aufmerksamkeit erregende Wirkung gemäß der vorliegenden Erfindung vorgesehen, die Ansteuerschemata zumindest teilweise pseudorandomisiert oder randomisiert zu ermitteln. Die pseudorandomisierte oder randomisierte Ansteuerung durch die Steuereinrichtung bedeutet also insbesondere, dass für wenigstens einen Teil der Zeitschritte, in denen die Steuereinrichtung die Segmente ansteuert, durch Pseudozufall oder Zufall gewählt wird, ob und/oder mit welcher Helligkeit jedes Segment der Dynamikgruppe zu betreiben ist.

Grundsätzlich ist im Rahmen der vorliegenden Erfindung also die Leuchtfläche in einzeln ansteuerbare Segmente unterteilt. Die Außenleuchte weist mithin eine Leuchtfläche auf, die durch eine oder mehrere Leuchteinheiten der Außenleuchte gebildet sein kann, beispielsweise durch wenigstens durch eine OLED und/oder wenigstens eine LED-Matrix. Die Leuchtfläche wiederum ist in Segmente unterteilt, die jeweils aus wenigstens einer (Einzel-)Lichtquelle gebildet sind und Teilflächen der Leuchtfläche definieren. Wird, was erfindungsgemäß besonders bevorzugt ist, eine segmentierte OLED verwendet, ergeben sich die Segmente durch die Segmentierung der segmentierten OLED, mit anderen Worten wird jedes Segment durch eine Teil-OLED als Lichtquelle gebildet. Wird eine LED-Matrix eingesetzt, können Segmente eine LED als Lichtquelle aufweisen, aber auch zusätzlich oder alternativ mehrere LEDs zu einem Segment zusammengefasst werden.

Mithin können konkret die Segmente durch eine segmentierte OLED der Außenleuchte und/oder wenigstens eine LED-Matrix der Außenleuchte gebildet sein. Organische Leuchtdioden (OLEDs) werden bereits seit einiger Zeit für den Einsatz in Kraftfahrzeugen vorgeschlagen. Bekannte Techniken erlauben es, insbesondere flächige OLEDs in eine bestimmte Anzahl von Segmenten aufzuteilen, die unabhängig angesteuert werden können. Matrizen herkömmlicher Leuchtdioden (LEDs) wurden insbesondere schon für Scheinwerfer vorgeschlagen, beispielsweise um Kurvenlichtfunktionen oder dergleichen umzusetzen.

Mit besonderem Vorteil kann dabei vorgesehen sein, dass alle Segmente eine gleiche Leuchtdichte und/oder Abstrahlcharakteristik aufweisen. Mit anderen Worten kann die Außenfläche so ausgebildet werden, dass ein sogenannter lambertscher Emitter gebildet wird, in dem die Leuchtdichte und das Abstrahlverhalten (Winkelverteilung) jedes Segments identisch ist. Eine derartige Umsetzung kann besonders vorteilhaft unter Verwendung einer OLED als homogene Flächenlichtquelle umsetzbar sein, die beispielsweise in gleichgroße Segmente unterteilt sein kann.

Zusammenfassend betrifft die Erfindung auf Basis segmentierter Außenleuchten die Realisierung einer dynamischen, zeitlich wenigstens teilweise wenigstens pseudozufällig veränderlichen Lichtsignatur. Mit anderen Worten erscheint die Außenleuchte in einem lebendigen Erscheinungsbild, so dass es ermöglicht wird, neue optische Effekte zu generieren und eine Fahrzeugbeleuchtung mit hochwertiger Anmutung zur Verfügung zu stellen. Der Dynamikbetriebsmodus erzeugt dynamische Lichtsignaturen, die besser erkennbar sind und eine höhere Aufmerksamkeit erzeugen, insbesondere ohne mehr zu blenden. Die wenigstens pseudorandomisierte Lichtfunktion kann dabei insbesondere auf eine spezielle Fahrzeugausstattung, einen speziellen Fahrzeugzustand oder einen speziellen Fahrmodus hinweisen, beispielsweise auf ein wenigstens teilweise autonom fahrendes Kraftfahrzeug, einen Energie-Effizienz-Modus oder dergleichen. Allgemein kann also gesagt werden, dass wenigstens einer des wenigstens einen Dynamikbetriebsmodus einen Betriebszustand des Kraftfahrzeugs, insbesondere wenigstens teilweise autonomen Betrieb und/oder die Aktivität eines bestimmten Fahrerassistenzsystems, anzeigen kann.

Der Dynamikbetriebsmodus kann bei Stillstand des Kraftfahrzeugs, beispielsweise für sogenannte Coming-Home-Funktionen und/oder Leaving-Home-Funktionen eingesetzt werden, wird mit besonderem Vorteil jedoch im Fahrbetrieb des Kraftfahrzeugs verwendet. Bei der Verwendung im Fahrbetrieb des Kraftfahrzeugs ist zweckmäßigerweise darauf zu achten, gewisse Vorgaben an die Lichtfunktion, die die Außenleuchte erfüllen soll, zu berücksichtigen, seien es durch die Lichtfunktion selbst definierte und/oder hersteller- oder gesetzesseitig vorgegebene Regelungen, insbesondere auch zulassungsrelevante Regelungen (Homologation).

Mit anderen Worten kann die Steuereinrichtung beim Betrieb der wenigstens einen Außenleuchte im Dynamikbetriebsmodus ausgebildet sein, wenigstens eine Anforderung eines Anforderungssatzes zu erfüllen, wobei die Anforderung als wenigstens eine auf das Erscheinungsbild der Außenleuchte bezogene und/oder die Ermittlung der Ansteuerschemata beschränkende Randbedingung umgesetzt sein kann. Mit anderen Worten kann die vorliegende Erfindung eingesetzt werden, um unter Verwendung einer Hardware mit einer segmentierten Leuchtfläche eine dynamische, lebendige Lichtsignatur zu erzeugen, die jedoch weiterhin alle, insbesondere zulassungstechnischen, Anforderungen erfüllen kann, mithin problemlos im Fahrbetrieb des Kraftfahrzeugs eingesetzt werden kann. Erfindungsgemäß ist vorgesehen, dass als wenigstens eine der wenigstens einen Randbedingung (und somit Anforderung) die Einhaltung wenigstens eines festen Gesamthelligkeitswerts aller leuchtend betriebenen Segmente über die zeitliche Abfolge verwendet wird. Außerdem kann vorgesehen sein, dass als wenigstens eine zusätzliche Randbedingung (und somit Anforderung) wenigstens eine vorgegebene geometrische Ausdehnung des durch die leuchtend betriebenen Segmente definierten geometrischen Erscheinungsbilds der Gruppe verwendet wird. Das bedeutet, es kann sichergestellt werden, dass in jedem Zeitschritt, also durch jedes Ansteuerschema, im Dynamikbetriebsmodus die Gesamthelligkeit, beispielsweise Gesamtlichtstärke, gleich bleibt, wobei der wenigstens eine Gesamthelligkeitswert besonders bevorzugt innerhalb eines durch einen Minimalwert und einen Maximalwert begrenzten Bereich liegt. Dieser Bereich kann sich beispielsweise aus rechtlichen und/oder sonstigen Vorgaben ergeben. Besonders vorteilhaft tritt dabei keine Änderung der Gesamthelligkeit in den Dynamikbetriebsmodus auf, sondern das Erscheinungsbild wird dynamisch wenigstens pseudorandomisiert derart verändert, dass die Gesamthelligkeit, die von der Leuchtfläche der Außenleuchte ausgeht, insbesondere die Gesamtlichtstärke für wenigstens einen Raumwinkel und/oder ein Raumwinkelintervall, gleich bleibt, so dass sich mithin eine dynamische, lebendige Lichtsignatur ergibt, ohne dass die grundsätzliche Außenwirkung der Außenleuchte verändert wird. Anders ausgedrückt wird die Aufmerksamkeit durch verbesserte Erkennbarkeit auf die Außenleuchte gelenkt, ohne dass deren Zweck, mithin die Lichtfunktion, beeinträchtigt wird, wobei insbesondere gesetzliche Anforderungen eingehalten werden können. Dabei kann sich der wenigstens eine Gesamthelligkeitswert als Gesamtlichtstärkewert insbesondere auf einen bestimmten Raumwinkel oder Raumwinkelbereich beziehen, wobei in Ausführungsbeispielen auch mehrere Gesamtlichtstärkewerte für unterschiedliche Raumwinkel und/oder Raumwinkelbereiche verwendet werden können.

Neben auf Anforderungen an die Gesamthelligkeit bezogenen Randbedingungen kann selbstverständlich auch die Einhaltung weiterer Anforderungen seitens der Steuereinrichtung sichergestellt werden, die entsprechend als Randbedingungen für die Ermittlung von Ansteuerschemata formuliert werden können. Andere Anforderungen können sich auf andere Lichtwerte beziehen, insbesondere homologationsrelevante Parameter der Außenleuchte. Beispielsweise können sich Anforderungen auf geometrische Ausdehnungen der geometrischen Erscheinungsform der Leuchtfläche beziehen, wobei die geometrische Erscheinungsform durch die leuchtend betriebenen Segmente und somit deren leuchtend betriebene Lichtquellen definiert wird. Beispielsweise kann eine Anforderung sein, dass der aufgrund des Leuchtens von Segmenten definierte zusammenhängende geometrische Bereich eine bestimmte Mindestausdehnung und/oder Maximalausdehnung nicht unter- beziehungsweise überschreitet.

Mithin können zusammenfassend durch Randbedingungen Anforderungen eines Anforderungssatzes an die Außenleuchte auch bei dem hier beschriebenen dynamischen, wenigstens pseudorandomisierten Leuchtbetrieb erfüllt werden. Dabei wird ein Einsatz der vorliegenden Erfindung insbesondere für Außenleuchten vorgeschlagen, deren Lichtfunktionen durch dynamische Veränderungen im Erscheinungsbild nicht beeinflusst werden und die sich daher für dynamische Lichtsignaturen besonders anbieten, mithin insbesondere Außenleuchten, die der besseren Sichtbarkeit des eigenen Kraftfahrzeugs als Lichtfunktion dienen. Insbesondere kann es sich bei der wenigstens einen Außenleuchte um eine Rückleuchte und/oder eine Tagfahrlichtleuchte handeln. Bei derartigen Außenleuchten werden meist keine weiteren Lichtfunktionen, wie beispielsweise anpassbare Ausleuchtbereiche, vorgesehen, wobei sich das hier vorgeschlagene Konzept grundsätzlich jedoch auch für andere Außenleuchten, beispielsweise Scheinwerfer eignet, wenn es im Rahmen einer Standardfunktion, beispielsweise normales Abblendlicht und/oder Coming-Home/Leaving-Home, eingesetzt wird.

Das erfindungsgemäße Verfahren sowie entsprechend auch die erfindungsgemäße Beleuchtungseinrichtung erlauben es also, sowohl die Erfüllung der insbesondere zulassungstechnischen und/oder durch Gesetze vorgegebenen Anforderungen und hochwertiges, dynamisches Design bereitzustellen, um die Erkennbarkeit und/oder Aufmerksamkeitserregung zu erhöhen und/oder ein besonders ansprechendes Äußeres des Kraftfahrzeugs auch bei Nacht, insbesondere auch im Fahrbetrieb, bereitzustellen. Die hierfür notwendigen grundlegenden Lichttechnologien, wie beispielsweise segmentierte OLEDs und/oder LED-Matrizen liegen als aktueller Stand der Technik bereits einsatzfähig vor. Auch Zufallsgeneratoren, die Hardwarekomponenten und/oder Softwarekomponenten umfassen können, existieren im Stand der Technik bereits und können im Rahmen der vorliegenden Erfindung eingesetzt werden, beispielsweise ein deterministischer Zufallsgenerator für Pseudo-Zufallszahlen, ein nichtdeterministischer Zufallsgenerator und/oder eine Mischform.

Erfindungsgemäß ist vorgesehen, dass die Ansteuerschemata, insbesondere seitens der Steuereinrichtung, gemäß wenigstens einer auf das Erscheinungsbild der Außenleuchte bezogenen und/oder die Ermittlung der Ansteuerschemata beschränkenden Randbedingung ermittelt werden. Abgesehen von der Randbedingung betreffend die Einhaltung wenigstens eines festen Gesamthelligkeitswerts aller leuchtend betriebenen Segmente über die zeitliche Abfolge müssen sich Randbedingungen nicht zwangsläufig auf die beschriebenen Anforderungen eines Anforderungssatzes beziehen, sondern können zudem auch gesetzt werden, um die Dynamik des Erscheinungsbildes, mithin der dynamischen Lichtsignatur, so zu konfigurieren, dass ein gewollter Gesamteindruck entsteht. Dabei kann beispielsweise vorgesehen sein, dass als wenigstens eine zusätzliche Randbedingung eine minimale und/oder eine maximale und/oder eine feste Anzahl leuchtend und/oder veränderlich leuchtend zu betreibender Segmente in der Dynamikgruppe und/oder eine minimale und/oder eine maximale Helligkeit leuchtend zu betreibender Segmente und/oder eine minimale und/oder maximale und/oder festgelegte Schrittweite der Helligkeit von einem Ansteuerschema zum nächsten und/oder eine Festlegung von mit konstanter Helligkeit zu betreibenden Segmenten beschreibt. Beispielsweise können also Randbedingungen genutzt werden, um den Rahmen zu definieren, in den die Pseudorandomisierung oder Randomisierung stattfindet. Dabei sind eine Vielzahl möglicher Ausführungsbeispiele denkbar, von denen einige im Folgenden noch beispielhaft genauer vorgestellt werden sollen.

In einer besonders vorteilhaften Weiterbildung der vorliegenden Erfindung kann vorgesehen sein, dass mehrere elementfremde, insbesondere räumlich zusammenhängende Dynamikgruppen einer Außenleuchte mit unterschiedlichen Randbedingungen verwendet werden, insbesondere zu unterschiedlichen Seiten des Kraftfahrzeugs ausgerichtete Dynamikgruppen. Beispielsweise können mithin an unterschiedliche Dynamikgruppen unterschiedliche Anforderungen gestellt werden, wie dies beispielsweise von Rückleuchten bekannt ist, die sich an einem Eck des Kraftfahrzeugs auch noch von der Heckseite zu einer rechten bzw. linken Seite des Kraftfahrzeugs erstrecken. Beispielsweise existieren dann Anforderungen, dass zumindest der senkrecht zur Fahrzeuglängsrichtung ausgerichtete Anteil der Leuchtfläche mit geringerer Helligkeit, insbesondere geringeren Gesamtlichtstärken, betrieben werden soll. Eine derartige, wie hier beschriebene Ausgestaltung ermöglicht es nun, für solche Fälle und ähnliche Fälle beispielsweise maximale Gesamtlichtstärken und/oder konstant aufrecht zu erhaltende Gesamtlichtstärken, bzw. allgemein Gesamthelligkeiten, für unterschiedliche Dynamikgruppen unterschiedlich zu definieren. Zweckmäßigerweise kann der zugrundeliegende Pseudorandomisierungsalgorithmus oder Randomisierungsalgorithmus, üblicherweise zumindest Teil eines Ermittlungsalgorithmus für die Ansteuerschemata, für die wenigstens zwei Dynamikgruppen gleich gewählt werden, gegebenenfalls auch als gemeinsamer Ermittlungsalgorithmus, um ein stimmiges Gesamterscheinungsbild der Außenleuchte bereitstellen zu können. In diesem Kontext kann es auch besonders vorteilhaft sein, wenn für wenigstens zwei der mehreren Dynamikgruppen einer Außenleuchte auch wenigstens eine gemeinsame Randbedingung verwendet wird. Auf diese Weise wird es mit besonderem Vorteil ermöglicht, die einzeln ansteuerbaren Segmente der Außenleuchte in örtlich zusammenhängende Dynamikgruppen aufzuteilen, wobei der Vorteil darin besteht, dass beispielsweise der Beitrag der einzelnen Gruppen zur Gesamthelligkeit der Außenleuchte differenziert konfigurierbar ist. Dies ermöglicht es, die unterschiedlichen Beiträge zur Gesamthelligkeit durch die Segmente, beispielsweise durch unterschiedliche Abstrahlwinkel, auszugleichen und trotz der dynamischen Ansteuerung eine insgesamt gleichbleibende Gesamthelligkeit zu erreichen.

Dabei sei an dieser Stelle noch allgemein angemerkt, dass bei einer einen einzuhaltenden Gesamthelligkeitswert für die gesamte Dynamikgruppe beschreibenden Randbedingung und bei pseudorandomisierter oder randomisierter Ermittlung der Sollhelligkeiten für die verschiedenen Leuchten zu betreibenden Segmente eine besonders vorteilhafte Ausgestaltung der vorliegenden Erfindung vorsehen kann, dass nach der Bestimmung der Sollhelligkeiten für leuchtend zu betreibende Segmente der Dynamikgruppe eine Summe aller Sollhelligkeiten gebildet und zur Ermittlung eines Abweichungswerts mit dem vorgegebenen Gesamthelligkeitswert verglichen werden, wobei der Abweichungswert gleichmäßig für alle Sollhelligkeiten, gegebenenfalls unter Berücksichtigung von einer minimalen und/oder einer maximalen Helligkeit als weitere Randbedingung, zur Herstellung des vorgegebenen Gesamthelligkeitswerts als Summe über alle Sollhelligkeiten auf die leuchtend zu betreibenden Segmente korrigierend verteilt wird.

Die vorliegende Erfindung sieht vor, dass in wenigstens einem des wenigstens einen Dynamikbetriebsmodus die Steuereinrichtung die Segmente in aufeinanderfolgenden Zeitschritten ansteuert, wobei ein Umschaltintervall als ein Mehrfaches des Zeitschritts definiert wird und zur Ermittlung der jeweils einem Zeitschritt zugeordneten zeitlichen Ansteuerschemata der Abfolge:
- Für jedes Umschaltintervall eine erste Untergruppe der Segmente der Dynamikgruppe mit für das Umschaltintervall statisch zu betreibenden, inaktiven Segmenten und eine zweite Untergruppe mit für das Umschaltintervall zeitlich veränderlich zu betreibenden, aktiven Segmenten pseudorandomisiert oder randomisiert gewählt wird,
- in jedem Umschaltintervall für jeden Zeitschritt ausschließlich für die aktiven Segmente die Helligkeit verändert wird, insbesondere innerhalb des Umschaltintervalls zeitlich monoton steigend und/oder fallend und/oder gemäß einer als Randbedingung vorgegebenen festen Schrittweite.

Gemäß der Erfindung findet also in dem Umschaltzeitintervall für eine zweite Untergruppe von leuchtend betriebenen Segmenten, wobei insbesondere die Segmente der ersten Untergruppe auch leuchtend betrieben werden, wobei die zweite Untergruppe pseudorandomisiert oder randomisiert bestimmt wird, eine graduelle Veränderung von deren Helligkeit statt, so dass sich insgesamt ein zwar dynamisch-lebendiges, dennoch aber ruhiges und angenehmes Bild ergibt. Die Helligkeitsveränderung, die durch wenigstens eine Randbedingungen, wie beschrieben, eingeschränkt ist, was selbstverständlich auch für die absoluten Sollhelligkeiten gelten kann, kann dabei in den aufgrund der Randbedingungen verbliebenen Freiheitsgraden selbstverständlich ebenso pseudorandomisiert oder randomisiert gewählt werden, um den dynamischen, abwechslungsreichen Eindruck weiter zu fördern.

Dabei ist vorgesehen, dass bei einem als Randbedingung vorgegebenen festen Gesamthelligkeitswert die Veränderung über die Zeitschritte eines Umschaltintervalls derart erfolgt, dass sich die Helligkeitserhöhungen und Erniedrigungen aufheben, insbesondere für jeweils ein Paar von aktiven Segmenten. Im letzten Fall wird die Anzahl der aktiven Segmente entsprechend gerade gewählt. Ist mithin beispielsweise eine als Randbedingung vorgegebene Schrittweite vorhanden, kann vorgesehen sein, immer dann, wenn zum nächsten Zeitschritt für ein bestimmtes aktives Segment eine Erhöhung der Helligkeit vorgenommen wird, für ein anderes, diesem zumindest temporär zugeordnetes aktives Segment die Helligkeit entsprechend der vorgegebenen festen Schrittweite zu reduzieren. So kann sichergestellt werden, dass innerhalb des Umschaltintervalls der vorgegebene, feste Gesamthelligkeitswert eingehalten wird.

Eine initiale Helligkeitsverteilung zu Beginn des ersten Umschaltintervalls, insbesondere also ein erstes Ansteuerschema, kann fest vorgegeben sein, wird jedoch bevorzugt pseudorandomisiert oder randomisiert ermittelt, insbesondere hinsichtlich Gesamthelligkeiten beschränkender Randbedingungen, wie zuvor beschrieben, durch Gleichverteilung des Abweichungswerts angepasst. Für nachfolgende Umschaltintervalle sind verschiedene Ansätze denkbar.

So kann eine weitere konkrete Weiterbildung dieser Ausführungsvariante vorsehen, dass als Ausgangspunkt für einen ersten Zeitschritt eines nachfolgenden Umschaltintervalls, zumindest für die nun aktiven Segmente, insbesondere für alle Segmente der Dynamikgruppe, die im letzten Zeitschritt des vorangehenden Umschaltintervalls verwendeten Helligkeiten verwendet werden oder dass für jedes Umschaltintervall, insbesondere wenigstens für die aktiven Segmente, neue Helligkeiten pseudorandomisiert oder randomisiert als Ausgangspunkt bestimmt werden. Dabei weist eine Variante, in der die Sollhelligkeiten zwischen Umschaltintervallen weiterverwendet werden, eine gewisse Kontinuität und ein etwas ruhigeres dynamisches Erscheinungsbild auf, während durch pseudorandomisierte beziehungsweise randomisierte Neu-Wahl von Helligkeiten für zumindest einen Teil der Segmente der Dynamikgruppe eine höhere Lebhaftigkeit umgesetzt werden kann.

Bevor weitere konkrete Varianten der vorliegenden Erfindung diskutiert werden, sei noch angemerkt, dass selbstverständlich die Steuereinrichtung ausgebildet sein kann, mehrere unterschiedliche Dynamikbetriebsmodi zu nutzen, beispielsweise, um eine benutzerseitige Auswahl zu erlauben oder aber, in bevorzugterer Ausgestaltung, durch die Nutzung mehrerer unterschiedlicher Dynamikbetriebsmodi unterschiedliche Betriebszustände des Kraftfahrzeugs, insbesondere einen wenigstens teilweise autonomen Betrieb und/oder die Aktivität eines bestimmten Fahrerassistenzsystems, anzuzeigen. Nichtsdestotrotz sollen letztlich gleichwirkende Verfahrensbestandteile und Parameter für die hier dargestellten konkreten Varianten von Dynamikbetriebsmodi zur besseren Lesbarkeit gleich bezeichnet werden, auch wenn mehrere unterschiedliche Varianten dieser Dynamikbetriebsmodi in einer einzigen Steuereinrichtung realisiert sein können und somit zur Nutzung bereitstehen können.

In einer zweiten, vorteilhaften, konkreten Variante eines Dynamikbetriebsmodus des erfindungsgemäßen Verfahrens kann vorgesehen sein, dass in wenigstens einem des wenigstens einen Dynamikbetriebsmodus die Steuereinrichtung die Segmente in aufeinanderfolgenden Zeitschritten ansteuert, wobei ein Umschaltintervall als mehrere Zeitschritte umfassend definiert ist und für jedes Umschaltintervall ein Ansteuerschema mit einer ersten Untergruppe der Segmente der Dynamikgruppe mit für das Umschaltintervall nicht leuchtend zu betreibenden, ausgeschalteten Segmenten und einer zweiten Untergruppe mit für das Umschaltintervall leuchtend zu betreibenden, eingeschalteten Segmenten pseudorandomisiert oder randomisiert ermittelt wird. Dabei kann zweckmäßigerweise vorgesehen sein, dass auch die Helligkeiten der eingeschalteten Segmente jeweils pseudorandomisiert oder randomisiert für jedes Umschaltintervall gewählt werden. In dieser einfachen konkreten Umsetzungsvariante wird letztlich für jedes Umschaltintervall, das auch einem der Zeitschritte entsprechen kann, ein neues, pseudozufälliges beziehungsweise zufälliges Erscheinungsbild erzeugt. Dabei kann insbesondere für jedes der vorhandenen, leuchtend zu betreibenden Segmente eine zufällige beziehungsweise pseudozufällige Sollhelligkeit vorgegeben werden. Mit anderen Worten werden in jedem Umschaltintervall eine bestimmte Anzahl leuchtend zu betreibender, eingeschalteter Segmente einer zweiten Untergruppe mit einem zumindest pseudorandomisierten Sollwert für die Helligkeit belegt, während die restlichen, ausgeschalteten Segmente, die nicht leuchtend zu betreiben sind, mit der Sollhelligkeit "Null" belegt werden. Zweckmäßigerweise können auch hier Randbedingungen verwendet werden, um zumindest einen Rahmen für die Pseudorandomisierung beziehungsweise Randomisierung anzugeben, beispielsweise eine minimale und/oder eine maximale Helligkeit leuchtend zu betreibender Segmente und/oder eine feste Anzahl leuchtend zu betreibender Segmente. Zweckmäßig ist es in diesem Zusammenhang auch, wenn eine Art Animation verwendet wird, was bei einem mehrere Zeitschritte umfassenden Umschaltintervall denkbar ist. Dann kann vorgesehen sein, dass das Einschalten und/oder das Ausschalten der eingeschalteten Elemente auf eine maximale Helligkeit beziehungsweise von der maximalen Helligkeit schrittweise über mehrere Zeitschritte des Umschaltintervalls erfolgt. Beispielsweise kann von der aktuellen Sollhelligkeit in einer linearen Rampe auf Null (oder eine neue Sollhelligkeit, falls das Segment auch Mitglied der neuen zweiten Untergruppe ist) abfallend (im Fall einer neuen Sollhelligkeit ggf. auch aufsteigend) geregelt werden.

In einer zweckmäßigen Ausgestaltung in dieser Variante kann zudem vorgesehen sein, dass mehrere zeitlich versetzte Umschaltintervalle derart verwendet werden, dass trotz eines schrittweisen Ein- und/oder Ausschaltens ein fester Gesamthelligkeitswert für die Dynamikgruppe beibehalten wird. Mithin kann man gegeneinander versetzte Umschaltintervalle derart verwenden, dass sich beispielsweise lineare Rampen beim Ein- und Ausschalten gegenseitig so ergänzen, dass dennoch, obwohl beispielsweise Erscheinungsbilder (Ansteuerbilder) sozusagen fließend ineinander übergehen, eine konstante, feste Gesamthelligkeit, insbesondere Gesamtlichtstärke, erhalten wird.

In einer dritten, im Rahmen der vorliegenden Erfindung denkbaren Variante zur konkreten Ermittlung von Ansteuerschemata in einem Dynamikbetriebsmodus kann vorgesehen sein, dass in wenigstens einem des wenigstens einen Dynamikbetriebsmodus die Steuereinrichtung die Helligkeit von pseudorandomisiert und/oder randomisiert gewählten, veränderlich leuchtend zu betreibenden Segmenten gemäß wenigstens zweier gegeneinander zeitlich versetzter Dreieckspulse steuert, insbesondere derart, dass durch den Versatz der Dreieckspulse ein fester Gesamthelligkeitswert für die Dynamikgruppe beibehalten wird. Die wenigstens zwei Dreieckspulse, gemäß denen die Helligkeit eines leuchtend zu betreibenden Segments in einem Helligkeitsintervall zunächst erhöht, dann erniedrigt bzw. zunächst erniedrigt, dann erhöht wird, können über wenige Parameter definiert werden. Dabei kann vorgesehen sein, dass die wenigstens zwei Dreieckspulse nicht gleichzeitig beginnen, wobei es jedoch durch unterschiedliche Zeitdauern dazu kommen kann, dass wenigstens zwei der wenigstens zwei Dreieckspulse gleichzeitig starten oder enden. Sobald ein Segment einen Dreieckspuls abschließt, kann ein anderes Segment pseudorandomisiert oder randomisiert gewählt und mit dem Dreieckspuls initialisiert werden, woraufhin sich der Ablauf wiederholt. In anderen denkbaren Varianten können auch andere Funktionen den Verlauf der Helligkeit bestimmten, beispielsweise Sinuspulse oder dergleichen, was jedoch die Ergänzung zu einer festen Gesamthelligkeit zu jedem Zeitpunkt komplizierter gestalten kann.

In einer zweckmäßigen, allgemeinen Weiterbildung der vorliegenden Erfindung kann vorgesehen sein, dass zusätzlich zu der wenigstens einen Dynamikgruppe wenigstens eine wenigstens ein Segment umfassende, zu der wenigstens einen Dynamikgruppe elementfremde Statikgruppe verwendet wird, deren Segmente dauerhaft an- oder dauerhaft ausgeschaltet werden, insbesondere mit konstanter Sollhelligkeit. Hierdurch ist es möglich, sozusagen eine gewisse Grundstruktur fest vorzugeben, die beispielsweise als eine Art statischer Rahmen für die zeitlich dynamische Aktivität der Dynamikgruppe wirkt. Derartige Statikgruppen können jedoch auch herangezogen werden, um beispielsweise diverse der eingangs bereits geforderten, beispielsweise zulassungstechnischen, Anforderungen zu erfüllen bzw. deren Erfüllung zu vereinfachen. Sollen beispielsweise bestimmte geometrische Ausdehnungen des geometrischen Erscheinungsbilds umgesetzt werden, kann eine zweckmäßige Weiterbildung in diesem Kontext vorsehen, dass wenigstens eine der wenigstens einen Statikgruppe immer leuchtende, den Rand der Leuchtfläche, insbesondere deren Ecken anzeigende, Segmente umfasst. Auf diese Wiese sind die Begrenzungen der Leuchtfläche der Außenleuchte grundsätzlich ersichtlich. Dabei sei an dieser Stelle angemerkt, dass es selbstverständlich im Rahmen der vorliegenden Erfindung auch möglich ist, die Statikgruppe steuerungstechnisch in die Dynamikgruppe zu integrieren, beispielsweise als innerhalb der Dynamikgruppe als mit einer festen Helligkeit bzw. fest ausgeschaltet zu betreibende Segmente, wie oben als Randbedingung erläutert.

Bei mehreren Außenleuchten ist es besonders vorteilhaft, die Gesamtausgestaltung des Kraftfahrzeugs, mithin insbesondere die Anordnung dieser Außenleuchten an dem Kraftfahrzeug und bei auf der gleichen bzw. auf benachbarten Seiten angeordnete Außenleuchten dessen Gesamteindruck zu berücksichtigen. So kann eine besonders bevorzugte Ausgestaltung der vorliegenden Erfindung vorsehen, dass die Beleuchtungseinrichtung zwei, insbesondere bezüglich wenigstens einer Symmetrieachse symmetrisch angeordnete und/oder räumlich benachbarte, einander zugeordnete Außenleuchten mit korrespondierenden Dynamikgruppen umfasst, für die gemeinsame Ansteuerschemata ermittelt werden. Das bedeutet, wenigstens zwei der Außenleuchten können aufeinander abgestimmt betrieben werden. Für die Außenleuchten können beispielsweise dieselben Randbedingungen und dergleichen gelten. In einem konkreten, vorteilhaften Beispiel kann vorgesehen sein, dass die zwei einander zugeordneten Außenleuchten symmetrisch auf einer Seite des Kraftfahrzeugs vorgesehen sind, wobei die Ansteuerschemata derart gespiegelt ermittelt werden, dass die entstehenden Erscheinungsbilder symmetrisch zur Fahrzeugmitte der jeweiligen Seite sind. Dies kann beispielsweise zwei Tagfahrleuchten und/oder zwei Rückleuchten betreffen.

Allgemein kann also gesagt werden, dass die hier beschriebene Funktionslogik beispielsweise pro Fahrzeugseite ausgeführt werden kann, beispielsweise alle Außenleuchten und somit alle Flächenleuchteinheiten innerhalb einer Fahrzeugseite oder sogar auf angrenzenden Fahrzeugseiten in den Steuerbetrieb einbezogen werden. Das bedeutet, ein Ermittlungsalgorithmus kann beispielsweise die Ansteuerschemata pro Fahrzeugseite ermitteln, insbesondere leuchtend zu betreibende Segmente und deren Helligkeitsniveau. Beispielsweise können bei sogenannten vierteiligen Leuchten jeweils die zwei Außenleuchten pro Fahrzeugseite als logische Leuchtengruppe gesehen werden. Besonders bevorzugt ist es jedoch, wenn die Funktionsausführung achsensymmetrisch zwischen der rechten und der linken Fahrzeugseite ausgeführt wird, das bedeutet, das Gesamtlichtbild, welches der Dynamikbetriebsmodus liefert, für das gesamte Kraftfahrzeug ist zu jeder Zeit achsensymmetrisch zur Fahrzeugmitte, so dass insbesondere auch Symmetrieanforderungen, wie sie beispielsweise zulassungsrelevant sein können, zu jedem Zeitpunkt, konkret also für jeden Zeitschritt, erfüllt werden können.

Allgemein, insbesondere bezüglich der dargestellten Varianten, sei nochmals angemerkt, dass der Arbeitsbereich der Pseudorandomisierung bzw. Randomisierung, wie bereits erwähnt, durch Randbedingungen parametrisiert werden kann, das bedeutet, es kann der Bereich der zulässigen Segmenthelligkeiten definiert werden, insbesondere auch als 0 bis 100 % der nutzbaren Helligkeit oder jede andere beliebige Kombination von nutzbaren Helligkeitsniveaus, global oder für einzelne Segmente. Die hier beschriebene Funktionslogik kann pro vorhandener Flächenleuchteinheit separat ausgeführt werden, er kann, insbesondere für Leuchten mit mehreren Leuchteinheiten, pro Außenleuchte ausgeführt werden und dergleichen. Selbstverständlich können aber Dynamikgruppen auch nur Teilbereiche einer Leuchteinheit bzw. Leuchtfläche insgesamt bilden, die nicht zwangsläufig einer bestimmten Leuchteinheit entsprechen müssen, sondern auch Unterbereiche dieser Leuchteinheit und/oder leuchteinheitsübergreifend definiert werden können.

Neben dem Verfahren betrifft die vorliegende Erfindung auch eine Beleuchtungseinrichtung für ein Kraftfahrzeug, wobei die Beleuchtungseinrichtung wenigstens eine Außenleuchte und eine Steuereinrichtung aufweist, wobei die Außenleuchte eine Leuchtfläche mit wenigstens zwei unabhängig ansteuerbaren, jeweils wenigstens eine Lichtquelle umfassenden Segmenten aufweist, welche sich dadurch auszeichnet, dass die Steuereinrichtung zur Durchführung des erfindungsgemäßen Verfahrens ausgebildet ist. Ein erfindungsgemäßes Kraftfahrzeug weist eine derartige erfindungsgemäße Beleuchtungseinrichtung auf. Sämtliche Ausführungen bezüglich des erfindungsgemäßen Verfahrens gelten entsprechend für die Beleuchtungseinrichtung und das Kraftfahrzeug fort, so dass auch mit diesen die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: eine Ausgestaltung einer Außenleuchte,
- Fig. 3: ein mögliches initiales Ansteuerschema für ein erstes Ausführungsbeispiel des erfindungsgemäßen Verfahrens,
- Fig. 4: Ansteuerschemata für ein Umschaltintervall in der ersten Ausführungsvariante,
- Fig. 5: Ansteuerschemata für ein drittes Ausführungsbeispiel des erfindungsgemäßen Verfahrens,
- Fig. 6: ein initiales Ansteuerschema für ein viertes Ausführungsbeispiel des erfindungsgemäßen Verfahrens,
- Fig. 7: verwendbare versetzt verlaufende Dreieckspulse,
- Fig. 8: mögliche Definitionen von Dynamikbereichen und Statikbereichen in einer ersten Variante, und
- Fig. 9: eine mögliche Definition eines Statikbereichs in einer zweiten Variante.

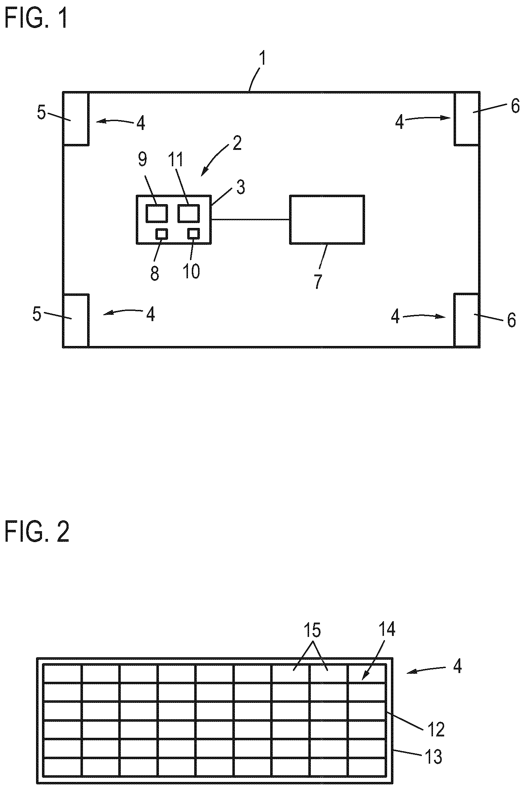

Fig. 1 zeigt eine Prinzipskizze eines erfindungsgemäßen Kraftfahrzeugs 1. Das Kraftfahrzeug 1 weist eine erfindungsgemäße Beleuchtungseinrichtung 2 auf, welche vorliegend neben einer Steuereinrichtung 3 als Außenleuchten 4 zwei Rückleuchten 5 und zwei Tagfahrleuchten 6 aufweist. Die Steuereinrichtung 3, welche beispielsweise wenigstens ein Steuergerät umfassen kann, ist ausgebildet, mit weiteren Fahrzeugsystemen 7 zu kommunizieren.

Jede der Außenleuchten 4 umfasst eine Leuchtfläche mit mehreren Segmenten, wobei jedes Segment jeweils wenigstens eine Lichtquelle aufweist. Die Segmente können durch die Steuereinrichtung 3 unabhängig voneinander angesteuert werden, beispielsweise in Zeitschritten, deren Länge beispielsweise 5 bis 30 ms betragen kann, und die durch den Takt eines Busses, der zur Kommunikation mit den Außenleuchten genutzt wird, definiert sein können. Die Leuchtfläche der Außenleuchten 4 kann sich durch eine oder mehrere Leuchteinheiten der jeweiligen Außenleuchte 4 ergeben, wobei die Leuchteinheiten beispielsweise als segmentierte OLEDs, deren Segmente unabhängig ansteuerbar sind, und/oder als LED-Matrizen, bei denen Segmente aus einer oder mehreren einzelnen Relais gebildet sein können, realisiert sein können. Bevorzugt werden vorliegend eine oder mehrere OLEDs verwendet, die als lambertscher Strahler wirken, bei denen mithin für alle Segmente die Leuchtdichte und die Abstrahlcharakteristik (Winkelverteilung) übereinstimmen.

Die Steuereinrichtung 3 ist zur Durchführung des erfindungsgemäßen Verfahrens ausgebildet, das heißt insbesondere, zum Betrieb der Außenleuchten 4 in wenigstens einem Dynamikbetriebsmodus. Ob bzw., bei mehreren Dynamikbetriebsmodi, welcher Dynamikbetriebsmodus verwendet wird, kann beispielsweise von einem Signal eines anderen Fahrzeugsystems 7 abhängen und beispielsweise dessen Aktivität oder allgemein einen Betriebszustand des Kraftfahrzeugs anzeigen. Beispielsweise ist es denkbar, den oder einen Dynamikbetriebsmodus bei wenigstens teilweise autonomen betriebenem Kraftfahrzeug 1 zu nutzen.

In dem Dynamikbetriebsmodus verändert sich das Erscheinungsbild der Leuchte, definiert durch leuchtend betriebene Segmente und deren Helligkeit, nachdem die Segmente vorliegend dimmbar sind, über die Zeit, so dass eine dynamische Lichtsignatur entsteht. Die zeitliche Veränderung wird definiert durch eine Abfolge von Ansteuerschemata, wobei jedes Ansteuerschema für jedes Segment die Information enthält, ob das Segment leuchtend betrieben werden soll und mit welcher Helligkeit (Sollhelligkeit) dies geschehen soll. Das Ansteuerschema kann mithin als eine Art Ansteuerbild, das in einem Erscheinungsbild resultiert, verstanden werden, wobei die einzelnen Segmente Bildpunkte bzw. Pixel sind.

Die Besonderheit dabei ist, dass die Ansteuerschemata zumindest teilweise zumindest pseudorandomisiert, also pseudorandomisiert oder randomisiert, ermittelt werden. Hierfür weist die Steuereinrichtung 3 einen Zufallsgenerator 8 auf, der Pseudozufallszahlen oder Zufallszahlen bereitstellt. Für derartige Zufallsgeneratoren 8, die beispielsweise als entsprechende Software- und/oder Hardwarekomponenten realisiert werden können, sind im Stand der Technik bereits eine Vielzahl von Ausgestaltungen bekannt, welche hier nicht näher dargelegt werden müssen.

In einer Ermittlungseinheit 9 der Steuereinrichtung 3 können die zur Ansteuerung zu verwendenden Ansteuerschemata ermittelt werden, wobei wenigstens teilweise die über den Zufallsgenerator 8 mögliche Pseudorandomisierung bzw. Randomisierung genutzt wird, worauf im Folgenden noch genauer eingegangen werden wird. Bei der Ermittlung der Ansteuerschemata bzw. zur Definition des zeitlichen Rahmens können Randbedingungen berücksichtigt werden, die beispielsweise in einem Speichermittel 10 der Steuereinrichtung 3 abgelegt werden können. Eine Steuereinheit 11 nutzt die ermittelten Ansteuerschemata, um die Außenleuchten 4 entsprechend anzusteuern. Randbedingungen können im Übrigen vielfältig sein und beispielsweise Anforderungen eines Anforderungssatzes umsetzen, beispielsweise, dass die Gesamthelligkeit, insbesondere beschrieben durch Gesamtlichtstärken, innerhalb wenigstens eines Helligkeitsintervalls, insbesondere jeweiliger Lichtstärkeintervalle, verbleibt, dass eine gewisse geometrische Erscheinungsform der Außenleuchte 4, insbesondere gewisse geometrische Ausdehnungen, vorhanden bleiben und dergleichen. Derartige Anforderungen des Anforderungssatzes stellen letztlich sicher, dass die gewünschte Lichtfunktion, im Falle der Tagfahrleuchte 6 und der Rückleuchte 5 die Wahrnehmbarkeit durch andere Verkehrsteilnehmer, erfüllt werden kann, beispielsweise gemäß gesetzlicher und/oder zulassungstechnischer Vorgaben. So ist erfindungsgemäß vorgesehen, dass die Ansteuerschemata gemäß wenigstens einer auf das Erscheinungsbild der Außenleuchte 4 bezogenen und/oder die Ermittlung der Ansteuerschemata beschränkenden Randbedingung ermittelt werden, wobei als wenigstens eine der wenigstens einen Randbedingung die Einhaltung wenigstens eines festen Gesamthelligkeitswerts aller leuchtend betriebenen Segmente 15 über die zeitliche Abfolge verwendet wird. Randbedingungen können aber auch den Rahmen definieren, in dem die Pseudorandomisierung oder Randomisierung stattfinden kann bzw. gewisse für alle Ansteuerschemata erhaltene Erscheinungseigenschaften definieren, insbesondere wiederum im Rahmen des Anforderungssatzes. Beispielsweise können Randbedingungen eine minimale und/oder eine maximale und/oder eine feste Anzahl Leuchten zu betreibender Segmente in der für die dynamische Lichtsignatur genutzten Dynamikgruppe und/oder eine minimale und/oder eine maximale Helligkeit leuchtend und/oder veränderlich leuchtend zu betreibender Segmente und/oder eine minimale und/oder maximale und/oder festgelegte Schrittweite der Sollhelligkeit von einem Ansteuerschema zum nächsten und/oder eine Festlegung von mit konstanter Helligkeit zu betreibenden Segmenten beschreiben.

Der Dynamikbetriebsmodus kann sich räumlich bezüglich der Außenleuchten 4, ihrer Leuchteinheiten und Leuchtflächen unterschiedlich erstrecken. Beispielsweise kann die von dem Dynamikbetriebsmodus angesprochene Dynamikgruppe von Segmenten so definiert werden, dass die Funktionslogik pro vorhandener Leuchteinheit separat ausgeführt wird, das bedeutet, die Ermittlungseinheit 23 ermittelt Ansteuerschemata pro vorhandener Leuchteinheit. Denkbar sind hier selbstverständlich auch nur Teilbereiche einzelner Leuchteinheiten oder die Definition von Dynamikgruppen, die Leuchteinheiten übergreifend Teilbereiche der jeweiligen Leuchteinheiten beschreiben. Denkbar ist es ferner, die Ansteuerschemata pro Außenleuchte 4 zu bestimmen, mithin ein Ansteuerschema bei jeder Veränderung für jede Außenleuchte 4 zu ermitteln, wobei insbesondere alle Segmente und alle Leuchteinheiten innerhalb einer Außenleuchte 4 einbezogen werden können. Denkbar ist es ferner, die Ermittlung der Ansteuerschemata fahrzeugseitenbezogen auszuführen, so dass beispielsweise alle Außenleuchten 4 einer Fahrzeugseite, beispielsweise des Hecks oder der Front, gleichzeitig betrachtet werden. Besonders bevorzugt sind jedoch konkrete Ausführungsbeispiele, in denen die Ermittlungen der Ansteuerschemata achsensymmetrisch zwischen linker und rechter Fahrzeugseite ausgeführt werden, das bedeutet, das Gesamterscheinungsbild des Dynamikbetriebsmodus des gesamten Kraftfahrzeuges 1 bzw. der gesamten Beleuchtungseinrichtung 2 ist zu jeder Zeit achsensymmetrisch zur Fahrzeugmitte (Fahrzeuglängsachse), so dass auch Symmetrieanforderungen erfüllt werden können. Dies kann sich beispielsweise jeweils auf die Rückfahrleuchten 5 und auf die Tagfahrleuchten 6 beziehen.

Es ist vorgesehen, wie noch genauer dargelegt werden wird, als Randbedingung eine feste, über die Zeit konstante Gesamthelligkeit in Form eines Gesamthelligkeitswerts vorzugeben, beispielsweise in Form von Gesamtlichtstärkewerten für verschiedene Raumwinkel bzw. Raumwinkelbereiche. Damit entsteht letztlich eine Art quasistatische Lichtsignatur bzw. ein quasistatisches Erscheinungsbild, das eine Anforderung bzw. einen Anspruch konstanter photometrischer Werte erfüllt und dennoch eine Dynamik aufweist, die die Wahrnehmbarkeit und Erkennbarkeit deutlich verbessert.

Fig. 2 zeigt ein konkretes, beispielhaftes Ausführungsbeispiel einer Außenleuchte 4, die eine segmentierte OLED 12 umfasst, die in einem Gehäuse 13 angeordnet ist und als einzige Leuchteinheit die Leuchtfläche 14 definiert. Hierbei bilden die Teil-OLEDs der segmentierten OLED 12 die Segmente 15.

In anderen Ausführungsbeispielen können die Segmente 15 auch durch einzelne LEDs oder Gruppen von LEDs einer LED-Matrix entsprechend gebildet werden. Auch, wie bereits dargelegt, können mehrere Leuchteinheiten, beispielsweise mehrere OLEDs 12, eingesetzt werden.

Im Folgenden wird anhand eines ersten konkreten Ausführungsbeispiels genauer erläutert, wie eine randomisierte Lichtsignatur mit einem konstanten, festen Gesamthelligkeitswert für die Dynamikgruppe erzeugt werden kann. Die Randbedingung eines festen, konstanten Gesamthelligkeitswerts bedeutet mithin, dass die Summe aller Sollhelligkeiten der Ansteuerschemata über die Zeit konstant bleibt. Anders formuliert kann auch gesagt werden, dass der Mittelwert der Sollhelligkeiten für alle Segmente 15 konstant sein soll, also einem Zielmittelwert entsprechen soll. Dabei sei an dieser Stelle noch angemerkt, dass die Dimmbarkeit von Segmenten 15 beispielsweise über eine Pulsweitenmodulation durch die Treiber hergestellt werden kann.

Im vorliegenden ersten Ausführungsbeispiel werden dabei als Randbedingungen folgende Parameter festgelegt:
- eine minimale Helligkeit leuchtend zu betreibender Segmente 15, mithin eine minimal zulässige Sollhelligkeit für jedes Segment 15,
- eine maximale Helligkeit leuchtend zu betreibender Segmente 15, mithin eine maximal zulässige Sollhelligkeit für jedes Segment 15,
- der feste Gesamthelligkeitswert,
- eine Dauer eines Umschaltintervalls in Zeitschritten, mithin die Dauer eines Intervalls, für die bestimmte Segmente 15 aktiv bleiben, hier veränderlich leuchtend betrieben werden,
- eine feste Anzahl veränderlich leuchtend zu betreibender Segmente 15, mithin die Anzahl möglicher aktiver Segmente 15,
- eine festgelegte Schrittweite der Helligkeit von einem Ansteuerschema zum nächsten, die definiert, um welchen Wert sich die Sollhelligkeiten der einzelnen aktiven Segmente 15 je Zeitschritt verändern können.

In Varianten dieses ersten Ausführungsbeispiels können auch konstante Segmente 15 festgelegt werden, also leuchtend betriebene Segmente 15, die mit einer konstanten, immer gleichen Sollhelligkeit angesteuert werden sollen.

Dabei muss der feste Gesamthelligkeitswert nicht zwangsläufig als solcher ausgedrückt werden, da es beispielsweise ausreichend sein kann, wenn die Anzahl der Segmente 15 bekannt ist, einen Zielmittelwert für die Sollhelligkeiten festzulegen, bei dessen Einhaltung selbstverständlich auch immer derselbe feste Gesamthelligkeitswert resultiert.

Dabei sei darauf hingewiesen, dass selbstverständlich die Randbedingungen aufeinander abgestimmt sein müssen, so dass überhaupt eine Lösung existiert. Beispielsweise muss selbstverständlich gelten, dass die maximale Helligkeit größer als der Zielmittelwert ist, welcher wiederum größer als die minimale Helligkeit sein sollte. Ferner sei an dieser Stelle angemerkt, dass das es selbstverständlich auch denkbar ist, beispielsweise Minima und Maxima der Sollhelligkeiten segmentspezifisch zu definieren, was auch für andere Parameter bzw. Randbedingungen gelten kann, beispielsweise die Schrittweite. Vorliegend sind die Randbedingungen jedoch für alle Segmente 15 der Dynamikgruppe festgelegt.

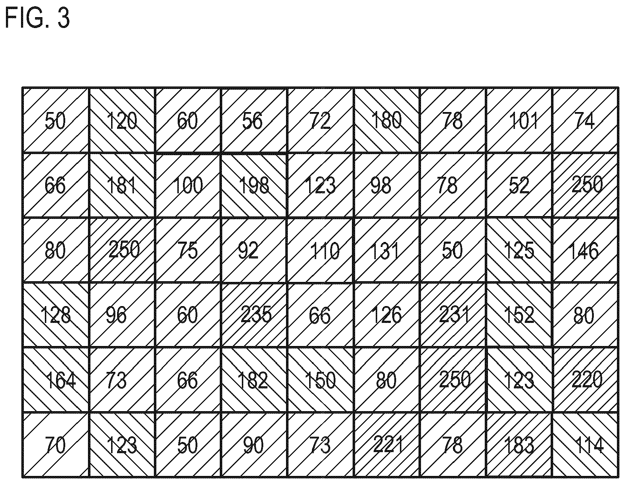

Im Dynamikbetriebsmodus wird zu dessen Beginn mit einem initialen Ansteuerschema begonnen. Ein initiales Ansteuerschema für die in Fig. 2 gezeigte Außenleuchte 4, bei dem alle Segmente 15 als Teil der Dynamikgruppe definiert wurden, zeigt Fig. 3. Die in dem Raster gezeigten Zahlen zeigen Helligkeitswerte, beispielsweise auf einer Skala von 0 bis 255, mit denen Segmente 15 an der entsprechenden Position anzusteuern sind. Die unterschiedlichen Schraffuren deuten das sich ergebende Erscheinungsbild der Außenleuchte 4 an. Das initiale Ansteuerschema kann entweder fest vorgegeben sein, oder aber mittels der Ermittlungseinheit 9 randomisiert oder pseudorandomisiert bestimmt werden, selbstverständlich derart, dass die Randbedingungen eingehalten werden. Das in Fig. 3 gezeigte initiale Ansteuerschema gilt dabei beispielhaft für eine minimale Helligkeit von 50, eine maximale Helligkeit von 250 und einen durch einen Zielmittelwert von 120 beschriebenen festen Gesamthelligkeitswert.

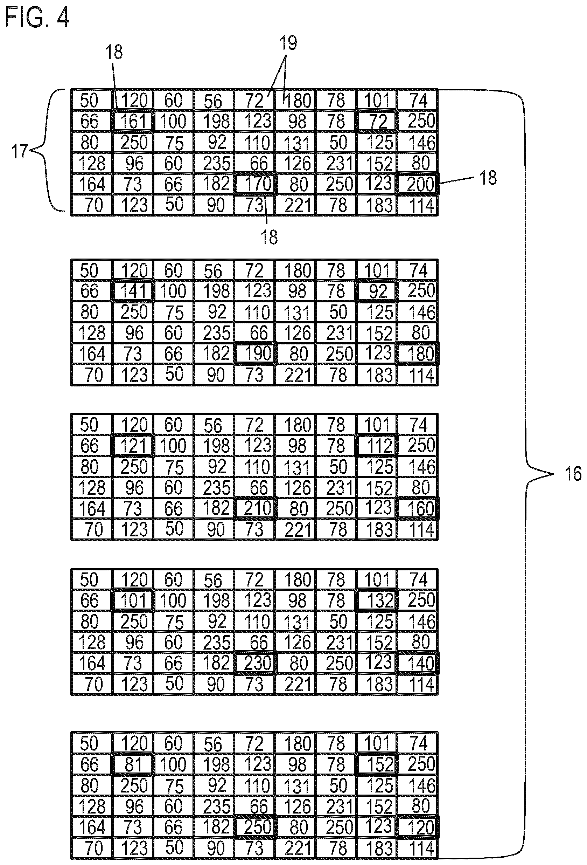

Mit dem initialen Ansteuerschema der Fig. 3 beginnt auch das erste Umschaltintervall. Für dieses erste und alle folgenden Umschaltintervalle werden statisch zu betreibende, inaktive Segmente 15 einer ersten Untergruppe der Segmente 15 und aktive, innerhalb des Umschaltintervalls zeitlich veränderlich zu betreibende Segmente 15 einer zweiten Untergruppe pseudorandomisiert oder randomisiert gewählt, und zwar die erwähnte feste Anzahl zeitlich veränderlich leuchtend zu betreibender Segmente 15 gemäß Randbedingung. Mit anderen Worten werden zu Beginn jedes Umschaltintervalls eine im Parameter "feste Anzahl (aktiver Segmente 15)" definierte Anzahl aktive Segmente 15 pseudozufällig oder zufällig ausgewählt. Die hierfür notwendigen Zufallszahlen werden durch den Zufallsgenerator 8 erzeugt. Für die Zeitdauer des Umschaltintervalls wird in jedem Aufruf, also für jeden Zeitschritt, die Sollhelligkeit der aktiven Segmente 15 der zweiten Untergruppe so verändert, dass der Zielmittelwert (und somit der feste Gesamthelligkeitswert) konstant bleibt. Dies ist beispielhaft durch die Abfolge von Ansteuerschemata der Fig. 4 dargestellt. Ein Umschaltintervall 16 umfasst dabei beispielhaft fünf Zeitschritte 17, wobei wiederum beispielhaft zur einfachen Darstellung die feste Anzahl aktiver Segmente 15 als vier gewählt wurde, die feste Schrittweite als 20. In den Ansteuerschemata sind die Sollhelligkeiten 18 für die aktiven Segmente 15 hervorgehoben dargestellt.

Dabei sind jeweils zwei Segmente 15 der hier aufgrund der festen Schrittweite geraden Anzahl von aktiven Segmenten 15 einander zugeordnet, was ebenso pseudozufällig oder zufällig gewählt sein kann wie die feste Veränderungsrichtung der Sollhelligkeit 18 (steigend oder fallend), so dass sich Veränderungen der Sollhelligkeiten 18 immer gegenseitig aufheben und die Gesamthelligkeit weiterhin dem festen Gesamthelligkeitswert entspricht. Innerhalb des Umschaltintervalls 16 bleiben die restlichen Sollhelligkeiten 19 (nicht hervorgehoben) konstant, also komplett ungeändert (inaktive Segmente 15).

Nach Abschluss des Umschaltintervalls 16 werden die erste Untergruppe und die zweite Untergruppe, also die inaktiven und die aktiven Segmente, neu bestimmt. In einer einen ruhigeren, dennoch dynamischen Eindruck erzeugenden ersten Variante wird dabei von den Sollhelligkeiten 18,19 im letzten Zeitschritt 17 des vorangehenden Umschaltintervalls 16 ausgegangen, in einer lebendigeren zweiten Variante können die Sollhelligkeiten 18, 19, insbesondere wenigstens für die neuen aktiven Segmente 15 (Sollhelligkeiten 18) pseudorandomisiert oder randomisiert neu bestimmt werden. Dabei erfolgen die Änderungen von Ansteuerschema zu Ansteuerschema selbstverständlich innerhalb der vorgegebenen Grenzen (durch die minimale und die maximale Helligkeit).

In einem zweiten Ausführungsbeispiel können mehrere jeweils örtlich zusammenhängende, aber elementfremde Dynamikgruppen für die Segmente 15 der Außenleuchte 4 definiert werden. Der Vorteil dieser örtlichen Dynamikgruppierung besteht darin, dass ein Eintrag zu einer durch einen festen Gesamthelligkeitswert fest vorgegebene Gesamthelligkeit der einzelnen Dynamikgruppen differenziert konfiguriert werden kann. Dies ermöglicht es, die unterschiedlichen Beiträge zur Gesamthelligkeit durch die unterschiedlichen Segmente 15, z. B. durch unterschiedliche Abstrahlwinkel, auszugleichen und trotz der dynamischen Ansteuerung eine insgesamt eine gleichbleibende Gesamthelligkeit zu erreichen.

Folgende Parameter können in diesem zweiten Ausführungsbeispiel zur Definition von Randbedingungen und Dynamikgruppen benutzt werden:
- Gruppendefinition, also die Anzahl der Dynamikgruppen und die Zuordnung der Segmente 15 zu den Dynamikgruppen, wobei jedes Segment 15 nur einer Dynamikgruppe zugewiesen sein darf,
- konstante Segmente 15, also solche Segmente 15, die mit einer über die Zeit konstanten Sollhelligkeit angesteuert werden sollen, wobei diesen Segmenten 15 auch Dynamikgruppen zugewiesen sein können, so dass letztlich alle Segmente 15 einer Außenleuchte 4 Dynamikgruppen zugeordnet werden,
- Initialwerte für veränderlich leuchtend zu betreibende Segmente 15, die die initiale Sollhelligkeit für alle nichtkonstanten Segmente 15 zu Beginn des Dynamikbetriebsmodus festlegt und für jedes veränderlich leuchtend zu betreibende Segment 15 einzeln definierbar oder global festlegbar ist; alternativ kann selbstverständlich auch eine pseudorandomisierte oder randomisierte Bestimmung von Sollhelligkeiten für das initiale Ansteuerschema, wie im ersten Ausführungsbeispiel, erfolgen,
- Aktualisierungszeit, also die Anzahl von Zeitschritten zwischen zwei Veränderungen der Sollhelligkeiten einer Dynamikgruppe, welche für jede Dynamikgruppe einzeln definierbar ist oder aber global für alle Dynamikgruppen,
- feste Gesamthelligkeitswerte, die für jede Dynamikgruppe einzeln definierbar sind oder aber global für alle Dynamikgruppen; idealerweise wird eine für alle Dynamikgruppen vorgegebene feste Gesamthelligkeit auf die Dynamikgruppen in für diese geltende feste Dynamikgruppen-Gesamthelligkeitswerte aufgeteilt,
- minimale und maximale Helligkeit leuchtend betriebener Segmente 15 wie oben bereits festgelegt, wobei auch hier eine dynamikgruppenspezifische Definition oder aber eine globale Definition möglich ist.

Zu Beginn des Dynamikbetriebsmodus wird wiederum ein initiales Ansteuerschema, das, wie oben beschrieben, vorgegeben sein kann oder aber pseudorandomisiert oder randomisiert ermittelt wird, verwendet, in dem, falls bestimmte Segmente 15 mit einer konstanten Sollhelligkeit angesteuert werden sollen, diesen selbstverständlich diese konstante Sollhelligkeit zugeordnet wird.

In diesem zweiten Ausführungsbeispiel wird die Ermittlung neuer Sollhelligkeiten für eine jeweilige Dynamikgruppe, mithin eine Aktualisierung der Ansteuerschemata, zyklisch nach Ablauf der parametrisierten Aktualisierungszeit der Dynamikgruppe durchgeführt. Für jedes veränderlich leuchtend zu betreibende Segment wird als Sollhelligkeit eine neue Zufallszahl vom Zufallsgenerator 8 erzeugt. Auch hier wie allgemein gilt, dass als Zufallszahlengenerator 8 ein nicht-deterministischer Generator, ein deterministischer Generator oder ein hybrider Ansatz (beispielsweise deterministischer Generator mit Initialwert, der beispielsweise von der aktuellen Uhrzeit abhängt) verwendet werden kann. Es kann eine beliebige Verteilung der Zufallszahlen verwendet werden, beispielsweise an Gleichverteilung oder eine Normalverteilung.

Zurückkehrend zum zweiten Ausführungsbeispiel werden bei der Aktualisierung des Ansteuerschemas für zumindest eine Dynamikgruppe die Zufallszahlen, die als Sollhelligkeiten verwendet werden sollen, selbstverständlich durch die minimale und die maximale Helligkeit, gegebenenfalls spezifisch für die Dynamikgruppe, begrenzt. Wird bei der Ermittlung eines neuen Ansteuerschemas für wenigstens eine Dynamikgruppe festgestellt, dass die Summe der so bestimmten Sollhelligkeiten aller Segmente der Dynamikgruppe nicht mit dem festen Gesamthelligkeitswert für diese Dynamikgruppe übereinstimmt, ergibt sich als Abweichungswert die auszugleichende Helligkeit. Diese auszugleichende Helligkeit wird gleichmäßig auf alle veränderlich leuchtend zu betreibenden Segmente der Dynamikgruppe verteilt.

Es sei angemerkt, dass die neu ermittelten Sollhelligkeiten, mithin die neu ermittelten Ansteuerschemata, unmittelbar nach der Ermittlung zur Ansteuerung der Segmente der Dynamikgruppe angewendet werden können. **In** einer Variante ist es jedoch auch denkbar, insbesondere dann, wenn die Aktualisierungszeit mehrere Zeitschritte umfasst, ein Auf- oder Abdimmen der Sollhelligkeit von einem Sollhelligkeitswert des letzten Ansteuerschemas auf den neu ermittelten Sollhelligkeitswert innerhalb der Aktualisierungszeit erfolgt, um sanfte Übergänge herbeizuführen.

**In** einem dritten Ausführungsbeispiel des erfindungsgemäßen Verfahrens kann auch für jedes Ansteuerschema ein neues pseudozufälliges bzw. zufälliges Erscheinungsbild mit teilweise ausgeschalteten Segmenten 15 erzeugt werden. Hierbei können zweckmäßig folgende Randbedingungen beschreibende Parameter verwendet werden:
- minimale und maximale Helligkeit, wie oben beschrieben,
- die Dauer eines Umschaltintervalls in Zeitschritten, mithin eines Intervalls, in dem dieselben eingeschalteten Segmente 15 leuchtend zu betreiben sind,
- feste Anzahl leuchtend zu betreibender Segmente 15, also die Anzahl an Segmenten 15 pro Umschaltintervall, die leuchtend betrieben werden sollen.

In diesem dritten Ausführungsbeispiel wird eine vorbestimmte, feste Anzahl leuchtend zu betreibender, also eingeschalteter, Segmente 15 pseudorandomisiert oder randomisiert ausgewählt und erhält eine pseudorandomisiert oder randomisiert ermittelte Sollhelligkeit zugeordnet, während die restlichen Segmente 15, eine erste Untergruppe, der Dynamikgruppe ausgeschaltet verbleiben, insbesondere also die Sollhelligkeit 0 zugeordnet bekommen. Die Sollhelligkeit für die eingeschalteten Segmente 15, die eine zweite Untergruppe bilden, liegt dabei zwischen der als Randbedingung vorgegebene minimalen und maximalen Helligkeit. Das Ein- und Ausschalten kann dabei in einer Variante dieses dritten Ausführungsbeispiels animiert erfolgen, beispielsweise von der letzten Sollhelligkeit bzw. vom ausgeschalteten Zustand in einer linearen Rampe auf die neue Sollhelligkeit bzw. den ausgeschalteten Zustand.

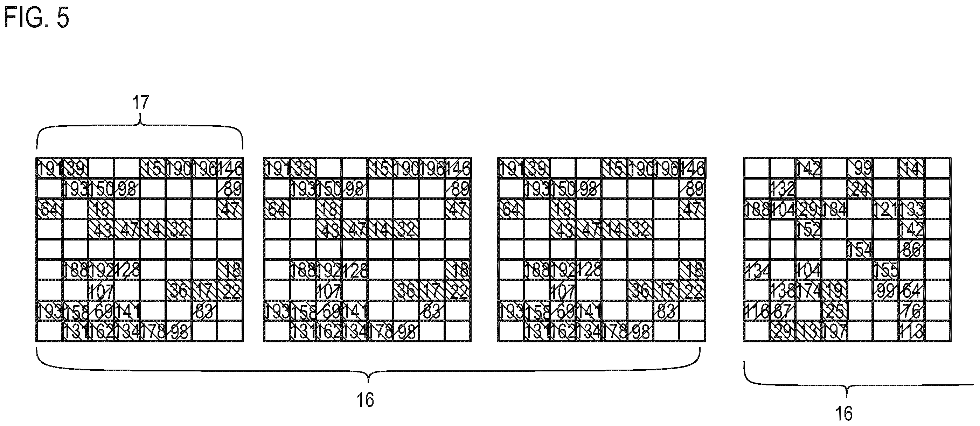

Fig. 5 erläutert dies in einer Abfolge von Ansteuerschemata für ein in diesem Fall quadratische Leuchtfläche aus 8 x 8 Segmenten 15 beispielhaft. Ein Umschaltintervall 16 umfasst dabei drei Zeitschritte 17, während denen das Ansteuerschema vollkommen unverändert bleibt. Einträge mit Zahlen, also Sollhelligkeiten, entsprechend dabei Sollhelligkeiten für eingeschaltete Segmente 15 der zweiten Untergruppe, während leergelassene Felder ausgeschalteten Segmenten 15 der ersten Untergruppe, mithin einer Sollhelligkeit von Null, entsprechen. Ersichtlich verändert sich das Ansteuerschema genau wie die eingeschalteten Segmente 15 zu Beginn eines folgenden Umschaltintervalls 16.

In einem vierten Ausführungsbeispiel des erfindungsgemäßen Verfahrens können wenigstens zwei versetzte Dreiecksimpulse zur Erzeugung gegenläufiger Lichtbewegungen verwendet werden, das bedeutet, während ein Segment 15 aufgedimmt wird, wird gleichzeitig ein anderes abgedimmt, um eine konstante, feste Gesamthelligkeit herzustellen.

Hierbei können beispielsweise folgende Parameter herangezogen werden:
- minimale und maximale Sollhelligkeiten, die die Rampen der jeweiligen Dreieckspulse verbinden,
- Rampenintervalle für die jeweiligen Dreieckspulse, mithin die Dauer eines Intervalls, in dem sich ein betroffenes Segment 15 von der minimalen Sollhelligkeit zur maximalen Sollhelligkeit und zurück bzw. von der maximalen Sollhelligkeit zur minimalen Sollhelligkeit und zurück verändert,
- feste Anzahl aktiver Segmente 15, mithin zu jedem Zeitpunkt aufgrund eines Dreieckspulses in ihrer Sollhelligkeit anzupassende Segmente 15.

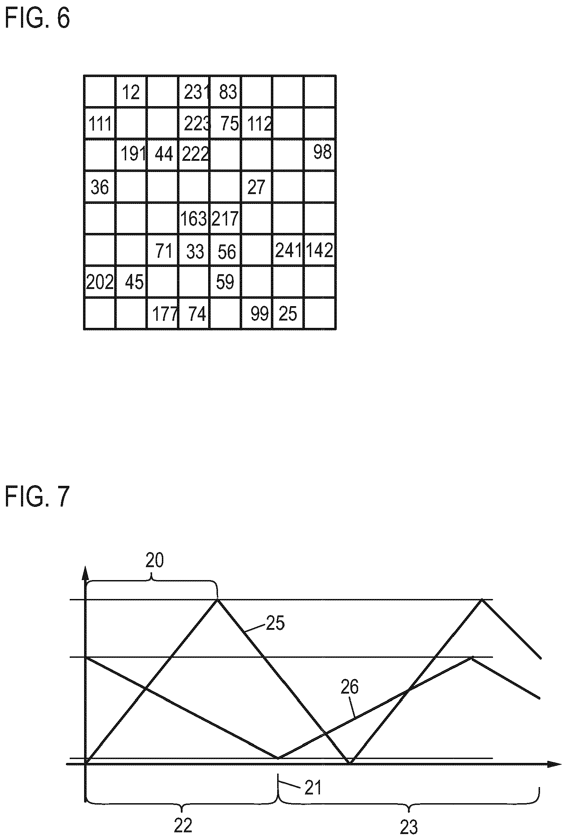

Die Pseudorandomisierung oder Randomisierung ergibt sich in diesem vierten Ausführungsbeispiel durch die Auswahl jeweiliger Segmente 15 der Dynamikgruppe, die von einem Dreieckspuls betroffen sein sollen. Als initiales Ansteuerschema zu Beginn des Dynamikbetriebsmodus wird die feste Anzahl als Segmenten 15 zufällig oder pseudozufällig ausgewählt und erhält jeweils einen der Dreieckspulse zugeordnet. Die initiale Sollhelligkeit wird zufällig oder pseudozufällig zwischen der minimalen und der maximalen Sollhelligkeit des Dreieckspulses definiert, um zu vermeiden, dass alle Dreieckspulse zum selben Zeitpunkt starten. Ein beispielhaftes initiales Ansteuerschema ist in Fig. 6 gezeigt. Fig. 7 zeigt beispielhaft den Verlauf von Dreieckspulsen 25, 26, wobei die halbe Rampenintervalldauer 20 für den Dreieckspuls 24 beispielhaft gezeigt ist. Zu einem Zeitpunkt 21 endet eine Instanz des Rampenpulses 26, so dass hier ein pseudorandomisierter bzw. randomisierter Wechsel von einem vorherigen Segment im Zeitraum 22 zu einem neuen Segment im Zeitraum 23 erfolgt.

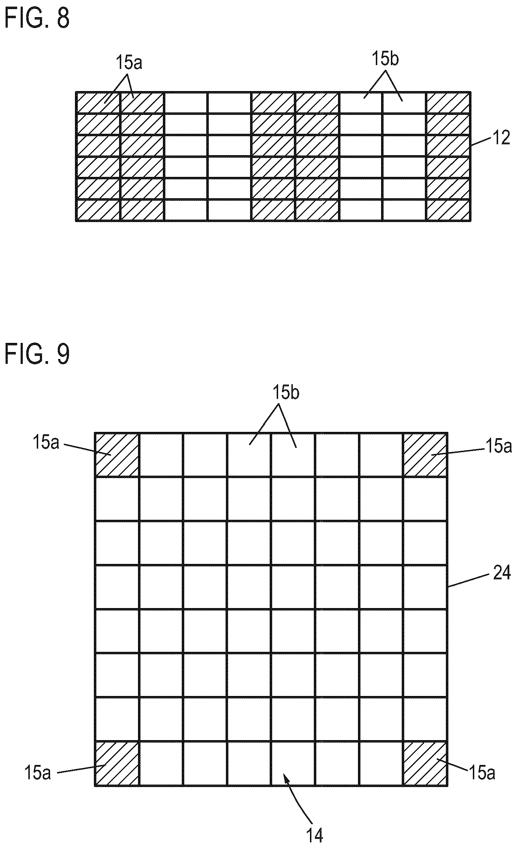

Auch wenn bislang beispielhaft Ausführungsbeispiele gezeigt wurden, für die die Dynamikgruppe alle Segmente 15 der Leuchtfläche 14 einer jeweiligen Außenleuchte 4 umfasst, ist es auch denkbar, zumindest einige Segmente 15 von den Dynamikgruppen auszunehmen, so dass diese Statikgruppen bilden. Ein Beispiel für die OLED 12 der Fig. 2 zeigt Fig. 8, in der schraffiert dargestellte Segmente 15a wenigstens einer Statikgruppe angehören, nicht schraffiert dargestellte Segmente 15b wenigstens einer Dynamikgruppe. Beispielsweise kann auf diese Weise eine konventionelle, statische Lichtsignatur beibehalten werden, die um eine dynamische Lichtsignatur ergänzt wird und dergleichen. Im Beispiel der Fig. 9, die sich auf eine quadratische OLED 24 bezieht, sind die statisch zu betreibenden Segmente 15a (wiederum schraffiert dargestellt) einer Statikgruppe als Randsegmente gewählt, so dass eine bestimmte geometrische Ausdehnung der Leuchtfläche 14 immer vorhanden ist, da diese Segmente 15a immer leuchtend betrieben werden.

Es sei jedoch darauf hingewiesen, dass, wie insbesondere beim ersten und zweiten Ausführungsbeispiel des erfindungsgemäßen Verfahrens erläutert wurde, solche "statischen Segmente" auch über entsprechende Randbedingungen in Dynamikgruppen enthalten sein können.

## Patentansprüche

1. Verfahren zum Betrieb einer Beleuchtungseinrichtung (2) für ein Kraftfahrzeug (1), wobei die Beleuchtungseinrichtung (2) wenigstens eine Außenleuchte (4) und eine Steuereinrichtung (3) aufweist, wobei die Außenleuchte (4) eine Leuchtfläche (14) mit mehreren unabhängig ansteuerbaren, jeweils wenigstens eine Lichtquelle umfassenden Segmenten (15, 15a, 15b) aufweist, wobei in wenigstens einem Dynamikbetriebsmodus der Steuereinrichtung (3) für wenigstens eine wenigstens zwei Segmente (15, 15a, 15b) umfassende Dynamikgruppe der Segmente (15, 15a, 15b) ein durch eine zeitliche Abfolge von Ansteuerschemata beschriebener, pseudorandomisierter oder randomisierter, zeitlich veränderlicher Leuchtbetrieb der Segmente (15, 15a, 15b) der Dynamikgruppe erfolgt, wobei jedes Ansteuerschema für jedes Segment (15, 15a, 15b) der Dynamikgruppe beschreibt, ob und/oder mit welcher Helligkeit es betrieben werden soll, wobei in wenigstens einem des wenigstens einen Dynamikbetriebsmodus die Steuereinrichtung (3) die Segmente (15, 15a, 15b) in aufeinanderfolgenden Zeitschritten (17) ansteuert, **dadurch gekennzeichnet, dass**
ein Umschaltintervall (16) als ein Mehrfaches des Zeitschritts (17) definiert wird und zur Ermittlung der jeweils einem Zeitschritt (17) zugeordneten Ansteuerschemata der zeitlichen Abfolge
- für jedes Umschaltintervall (16) eine erste Untergruppe der Segmente (15, 15a, 15b) der Dynamikgruppe mit für das Umschaltintervall (16) statisch zu betreibenden, inaktiven Segmenten (15, 15a, 15b) und eine zweite Untergruppe mit für das Umschaltintervall (16) zeitlich veränderlich zu betreibenden, aktiven Segmenten (15, 15a, 15b) pseudorandomisiert oder randomisiert gewählt wird,
- in jedem Umschaltintervall (16) für jeden Zeitschritt (17) ausschließlich für die aktiven Segmente (15, 15a, 15b) die Helligkeit verändert wird,
wobei die Ansteuerschemata gemäß wenigstens einer auf das Erscheinungsbild der Außenleuchte (4) bezogenen und/oder die Ermittlung der Ansteuerschemata beschränkenden Randbedingung ermittelt werden, wobei als wenigstens eine der wenigstens einen Randbedingung die Einhaltung wenigstens eines festen Gesamthelligkeitswerts aller leuchtend betriebenen Segmente (15, 15a, 15b) über die zeitliche Abfolge verwendet wird und die Veränderung über die Zeitschritte (17) eines Umschaltintervalls (16) derart erfolgt, dass sich die Helligkeitserhöhungen und Erniedrigungen aufheben.

2. Verfahren nach Anspruch 1,
**dadurch gekennzeichnet,**
**dass** als wenigstens eine zusätzliche Randbedingung wenigstens eine vorgegebene geometrische Ausdehnung des durch die leuchtend betriebenen Segmente (15, 15a, 15b) definierten geometrischen Erscheinungsbilds der Dynamikgruppe verwendet wird.

3. Verfahren nach Anspruch 1 oder 2,
**dadurch gekennzeichnet,**
**dass** als wenigstens eine zusätzliche Randbedingung eine minimale und/oder eine maximale und/oder eine feste Anzahl leuchtend und/oder veränderlich leuchtend zu betreibender Segmente (15, 15a, 15b) in der Dynamikgruppe und/oder eine minimale und/oder eine maximale Helligkeit leuchtend zu betreibender Segmente (15, 15a, 15b) und/oder eine minimale und/oder maximale und/oder festgelegte Schrittweite der Helligkeit von einem Ansteuerschema zum nächsten und/oder eine Festlegung von mit konstanter Helligkeit zu betreibenden Segmenten (15, 15a, 15b) beschreibt.

4. Verfahren nach einem der vorangehenden Ansprüche,
**dadurch gekennzeichnet,**
**dass** mehrere elementfremde, insbesondere räumlich zusammenhängende Dynamikgruppen einer Außenleuchte (4) mit unterschiedlichen Randbedingungen verwendet werden, insbesondere zu unterschiedlichen Seiten des Kraftfahrzeugs (1) ausgerichtete Dynamikgruppen.

5. Verfahren nach Anspruch 4,
**dadurch gekennzeichnet,**
**dass** für wenigstens zwei der mehreren Dynamikgruppen einer Außenleuchte (4) auch wenigstens eine gemeinsame Randbedingung verwendet wird.

6. Verfahren nach einem der vorangehenden Ansprüche,
**dadurch gekennzeichnet,**
**dass** die Helligkeitsveränderung innerhalb des Umschaltintervalls (16) zeitlich monoton steigend und/oder fallend und/oder gemäß einer als Randbedingung vorgegebenen festen Schrittweite erfolgt.

7. Verfahren nach einem der vorangehenden Ansprüche,
**dadurch gekennzeichnet,**
**dass** sich die Helligkeitserhöhungen und Erniedrigungen für jeweils ein Paar von aktiven Segmenten (15, 15a, 15b) aufheben.

8. Verfahren nach einem der vorangehenden Ansprüche,
**dadurch gekennzeichnet,**
**dass** als Ausgangspunkt für einen ersten Zeitschritt (17) eines nachfolgenden Umschaltintervalls (16), zumindest für die nun aktiven Segmente (15, 15a, 15b), insbesondere für alle Segmente (15, 15a, 15b) der Dynamikgruppe, die im letzten Zeitschritt (17) des vorangehenden Umschaltintervalls (16) verwendeten Helligkeiten verwendet werden oder für jedes Umschaltintervall (16), insbesondere wenigstens für die aktiven Segmente (15, 15a, 15b), neue Helligkeiten pseudorandomisiert oder randomisiert als Ausgangspunkt bestimmt werden.

9. Verfahren nach einem der vorangehenden Ansprüche,
**dadurch gekennzeichnet,**
**dass** in wenigstens einem des wenigstens einen Dynamikbetriebsmodus die Steuereinrichtung (3) die Segmente (15, 15a, 15b) in aufeinanderfolgenden Zeitschritten (17) ansteuert, wobei ein Umschaltintervall (16) als mehrere Zeitschritte (17) umfassend definiert ist und für jedes Umschaltintervall (16) ein Ansteuerschema mit einer ersten Untergruppe der Segmente (15, 15a, 15b) der Dynamikgruppe mit für das Umschaltintervall (16) nicht leuchtend betreibenden, ausgeschalteten Segmenten (15, 15a, 15b) und einer zweiten Untergruppe mit für das Umschaltintervall leuchtend zu betreibenden, eingeschalteten Segmenten (15, 15a, 15b) pseudorandomisiert oder randomisiert ermittelt wird.

10. Verfahren nach Anspruch 9,
**dadurch gekennzeichnet,**
**dass** auch die Helligkeiten der eingeschalteten Segmente (15, 15a, 15b) jeweils pseudorandomisiert oder randomisiert für jedes Umschaltintervall (16) gewählt werden und/oder dass das Einschalten und/oder das Ausschalten der eingeschalteten Segmente (15, 15a, 15b) auf eine maximale Helligkeit bzw. von der maximalen Helligkeit schrittweise über mehrere Zeitschritte (17) des Umschaltintervalls (16) erfolgt.

11. Verfahren nach einem der vorangehenden Ansprüche,
**dadurch gekennzeichnet,**
**dass** in wenigstens einem des wenigstens einen Dynamikbetriebsmodus die Steuereinrichtung (3) die Helligkeit von pseudorandomisiert und/oder randomisiert gewählten, veränderlich leuchtend zu betreibenden Segmenten (15, 15a, 15b) gemäß wenigstens zweier gegeneinander zeitlich versetzter Dreieckspulse (25, 26) steuert, insbesondere derart, dass durch den Versatz der Dreieckspulse (25, 26) ein fester Gesamthelligkeitswert für die Dynamikgruppe beibehalten wird.

12. Verfahren nach einem der vorangehenden Ansprüche,
**dadurch gekennzeichnet,**
**dass** die Segmente (15, 15a, 15b) durch eine segmentierte OLED (12, 24) der Außenleuchte (4) und/oder durch wenigstens eine LED-Matrix der Außenleuchte (4) gebildet sind und/oder das wenigstens eine der wenigstens einen Außenleuchte (4) eine Rückleuchte (5) und/oder eine Tagfahrlichtleuchte (6) ist und/oder dass alle Segmente (15, 15a, 15b) eine gleiche Leuchtdichte und/oder Abstrahlcharakteristik aufweisen.

13. Verfahren nach einem der vorangehenden Ansprüche,
**dadurch gekennzeichnet,**
**dass** der Dynamikbetriebsmodus bei Stillstand des Kraftfahrzeugs (1) und/oder im Fahrbetrieb des Kraftfahrzeugs (1) verwendet wird und/oder wenigstens einer des wenigstens einen Dynamikbetriebsmodus einen Betriebszustand des Kraftfahrzeugs (1), insbesondere wenigstens teilweise autonomen Betrieb und/oder die Aktivität eines bestimmten Fahrerassistenzsystems, anzeigt.

14. Verfahren nach einem der vorangehenden Ansprüche,
**dadurch gekennzeichnet,**
**dass** zusätzlich zu der wenigstens einen Dynamikgruppe wenigstens eine wenigstens ein Segment (15, 15a, 15b) umfassende, zu der wenigstens einen Dynamikgruppe elementfremde Statikgruppe verwendet wird, deren Segmente (15, 15a, 15b) dauerhaft an oder dauerhaft aus geschaltet werden.

15. Verfahren nach Anspruch 14,
**dadurch gekennzeichnet,**
**dass** wenigstens eine der wenigstens einen Statikgruppe immer leuchtende, am Rand der Leuchtfläche (14), insbesondere deren Ecken anzeigende, Segmente (15, 15a, 15b) umfasst.

16. Verfahren nach einem der vorangehenden Ansprüche,
**dadurch gekennzeichnet,**
**dass** die Beleuchtungseinrichtung zwei, insbesondere bezüglich wenigstens einer Symmetrieachse symmetrisch angeordnete und/oder räumlich benachbarte, einander zugeordnete Außenleuchten (4) mit korrespondierenden Dynamikgruppen umfasst, für die gemeinsame Ansteuerschemata ermittelt werden.

17. Verfahren nach Anspruch 16,
**dadurch gekennzeichnet,**
**dass** die zwei einander zugeordneten Außenleuchten (4) symmetrisch auf einer Seite des Kraftfahrzeugs (1) vorgesehen sind, wobei die Ansteuerschemata derart gespiegelt ermittelt werden, so dass die entstehenden Erscheinungsbilder symmetrisch zur Fahrzeugmitte der jeweiligen Seite sind.

18. Beleuchtungseinrichtung (2) für ein Kraftfahrzeug (1), wobei die Beleuchtungseinrichtung (2) wenigstens eine Außenleuchte (4) und eine Steuereinrichtung (3) aufweist, wobei die Außenleuchte (4) eine Leuchtfläche mit mehreren unabhängig ansteuerbaren, jeweils wenigstens eine Lichtquelle umfassenden Segmenten (15, 15a, 15b) aufweist,
**dadurch gekennzeichnet,**
**dass** die Steuereinrichtung (3) zur Durchführung eines Verfahrens nach einem der vorangehenden Ansprüche ausgebildet ist.

19. Kraftfahrzeug (1), aufweisend eine Beleuchtungseinrichtung (2) nach Anspruch 18.

## Claims

1. Method for operating a lighting device (2) for a motor vehicle (1), the lighting device (2) having at least one exterior lamp (4) and a control device (3), the exterior lamp (4) having a luminous surface (14) with multiple independently activable segments (15, 15a, 15b) that each comprise at least one light source, wherein, in at least one dynamic operating mode of the control device (3), for at least one dynamic group of the segments (15, 15a, 15b), which comprises at least two segments (15, 15a, 15b), a pseudo-randomized or randomized, time-variable lighting mode of the segments (15, 15a, 15b) of the dynamic group, which lighting mode is described by a time sequence of activation schemes, is effected, each activation scheme describing for each segment (15, 15a, 15b) of the dynamic group whether and/or at what brightness it is supposed to be operated, wherein in at least one of the at least one dynamic operating mode the control device (3) activates the segments (15, 15a, 15b) in successive time steps (17), **characterized in that** a switching interval (16) is defined as a multiple of the time step (17) and, to determine the activation schemes of the time sequence that are each assigned to a time step (17),
- for each switching interval (16), a first subgroup of the segments (15, 15a, 15b) of the dynamic group containing inactive segments (15, 15a, 15b) that are intended to be operated statically for the switching interval (16) and a second subgroup containing active segments (15, 15a, 15b) that are intended to be operated variably over time for the switching interval (16) are selected in a pseudo-randomized or randomized manner,
- for each time step (17) in each switching interval (16), the brightness is varied exclusively for the active segments (15, 15a, 15b),
wherein the activation schemes are determined in accordance with at least one boundary condition that is related to the appearance of the exterior lamp (4) and/or restricts the determination of the activation schemes, wherein at least one of the at least one boundary condition used is compliance with at least one fixed total brightness value of all lit segments (15, 15a, 15b) over the time sequence, and the variation over the time steps (17) of a switching interval (16) is effected in such a way that the brightness increases and decreases cancel each other out.

2. Method according to Claim 1,
**characterized**
**in that** at least one additional boundary condition used is at least one specified geometric extent of the geometric appearance of the dynamic group, as defined by the lit segments (15, 15a, 15b).

3. Method according to Claim 1 or 2,
**characterized**
**in that** at least one additional boundary condition is described by a minimum and/or maximum and/or fixed number of segments (15, 15a, 15b) to be lit and/or variably lit in the dynamic group and/or by a minimum and/or maximum brightness of segments (15, 15a, 15b) to be lit and/or by a minimum and/or maximum and/or stipulated increment of brightness from one activation scheme to the next and/or by a stipulation of segments (15, 15a, 15b) to be operated at constant brightness.

4. Method according to one of the preceding claims, **characterized**
**in that** multiple, in particular spatially contiguous, dynamic groups of an exterior lamp (4) that have no common elements and different boundary conditions are used, in particular dynamic groups aligned with different sides of the motor vehicle (1).

5. Method according to Claim 4,
**characterized**
**in that** at least one common boundary condition is also used for at least two of the multiple dynamic groups of an exterior lamp (4).

6. Method according to one of the preceding claims, **characterized**
**in that** the brightness variation within the switching interval (16) is effected so as to monotonously rise and/or fall over time and/or in accordance with a fixed increment specified as a boundary condition.

7. Method according to one of the preceding claims, **characterized**
**in that** the brightness increases and decreases for each pair of active segments (15, 15a, 15b) cancel each other out.

8. Method according to one of the preceding claims, **characterized**
**in that** the starting point used for a first time step (17) of a subsequent switching interval (16), at least for the now active segments (15, 15a, 15b), in particular for all segments (15, 15a, 15b) of the dynamic group, are the brightnesses used in the last time step (17) of the preceding switching interval (16), or new brightnesses are determined in a pseudo-randomized or randomized manner for each switching interval (16), in particular at least for the active segments (15, 15a, 15b), as the starting point.

9. Method according to one of the preceding claims, **characterized**
**in that** in at least one of the at least one dynamic operating mode the control device (3) activates the segments (15, 15a, 15b) in successive time steps (17), wherein a switching interval (16) is defined as comprising multiple time steps (17) and for each switching interval (16) an activation scheme with a first subgroup of the segments (15, 15a, 15b) of the dynamic group containing segments (15, 15a, 15b) that are not lit and are switched off for the switching interval (16) and a second subgroup containing segments (15, 15a, 15b) that are to be lit and are switched on for the switching interval is determined in a pseudo-randomized or randomized manner.

10. Method according to Claim 9,
**characterized**
**in that** the brightnesses of the switched-on segments (15, 15a, 15b) are also each selected in a pseudo-randomized or randomized manner for each switching interval (16) and/or in that the switching-on and/or switching-off of the switched-on segments (15, 15a, 15b) to a maximum brightness or from the maximum brightness is effected gradually over multiple time steps (17) of the switching interval (16).

11. Method according to one of the preceding claims, **characterized**
**in that** in at least one of the at least one dynamic operating mode the control device (3) controls the brightness of segments (15, 15a, 15b) to be variably lit that have been selected in a pseudo-randomized and/or randomized manner in accordance with at least two out-of-phase triangular-waveform pulses (25, 26), in particular in such a way that the offset between the triangular-waveform pulses (25, 26) maintains a fixed total brightness value for the dynamic group.

12. Method according to one of the preceding claims, **characterized**
**in that** the segments (15, 15a, 15b) are formed by a segmented OLED (12, 24) of the exterior lamp (4) and/or by at least one LED matrix of the exterior lamp (4) and/or in that at least one of the at least one exterior lamp (4) is a rear light (5) and/or a daytime running light (6) and/or in that all segments (15, 15a, 15b) have the same luminance and/or radiation characteristics.

13. Method according to one of the preceding claims, **characterized**
**in that** the dynamic operating mode is used when the motor vehicle (1) is at a standstill and/or when the motor vehicle (1) is moving, and/or at least one of the at least one dynamic operating mode indicates an operating state of the motor vehicle (1), in particular at least partially autonomous operation, and/or the activity of a particular driver assistance system.

14. Method according to one of the preceding claims, **characterized**
**in that** in addition to the at least one dynamic group, at least one static group that comprises at least one segment (15, 15a, 15b) and has no common elements with the at least one dynamic group is used, the segments (15, 15a, 15b) of which are permanently switched on or permanently switched off.

15. Method according to Claim 14,
**characterized**
**in that** at least one of the at least one static group comprises always lit segments (15, 15a, 15b) at the edge of the luminous surface (14), which in particular indicate the corners thereof.

16. Method according to one of the preceding claims, **characterized**
**in that** the lighting device comprises two mutually assigned exterior lamps (4), which are in particular arranged symmetrically with respect to at least one axis of symmetry and/or spatially adjacent, with corresponding dynamic groups, for which common activation schemes are determined.

17. Method according to Claim 16,
**characterized**
**in that** the two mutually assigned exterior lamps (4) are provided symmetrically on one side of the motor vehicle (1), wherein the activation schemes are determined so as to be mirrored such that the resulting appearances are symmetrical about the vehicle centre of the respective side.

18. Lighting device (2) for a motor vehicle (1), the lighting device (2) having at least one exterior lamp (4) and a control device (3), the exterior lamp (4) having a luminous surface with multiple independently activable segments (15, 15a, 15b) that each comprise at least one light source,
**characterized**
**in that** the control device (3) is designed to carry out a method according to one of the preceding claims.

19. Motor vehicle (1), comprising a lighting device (2) according to Claim 18.

## Revendications

1. Procédé pour faire fonctionner un dispositif d'éclairage (2) destiné à un véhicule à moteur (1), le dispositif d'éclairage (2) comportant au moins un feu extérieur (4) et un dispositif de commande (3), le feu extérieur (4) présentant une surface lumineuse (14) comportant plusieurs segments (15, 15a, 15b) pouvant être commandés indépendamment et comprenant respectivement au moins une source lumineuse, dans lequel, dans au moins un mode de fonctionnement dynamique du dispositif de commande (3), il se produit, pour au moins un groupe dynamique des segments (15, 15a, 15b), comprenant au moins deux segments (15, 15a, 15b), un mode de fonctionnement lumineux des segments (15, 15a, 15b) du groupe dynamique qui est variable dans le temps, pseudorandomisé ou randomisé, et décrit par une séquence temporelle de schémas de commande, chaque schéma de commande décrivant, pour chaque segment (15, 15a, 15b) du groupe dynamique, s'il doit être utilisé et/ou avec quelle luminosité, le dispositif de commande (3) commandant les segments (15, 15a, 15b) selon des pas de temps successifs (17) dans au moins l'un du ou des modes de fonctionnement dynamiques, **caractérisé en ce que** un intervalle de commutation (16) est défini comme étant un multiple du pas de temps (17) et, pour la détermination des schémas de commande, respectivement associés à chaque pas de temps (17), de la séquence temporelle
- pour chaque intervalle de commutation (16), un premier sous-groupe des segments (15, 15a, 15b) du groupe dynamique comprenant des segments (15, 15a, 15b) inactifs devant être activés de manière statique pour l'intervalle de commutation (16), et un deuxième sous-groupe comprenant des segments actifs (15, 15a, 15b) devant être activés de manière variable dans le temps pour l'intervalle de commutation (16) sont choisis de manière pseudorandomisée ou randomisée,
- dans chaque intervalle de commutation (16), pour chaque pas de temps (17), la luminosité est modifiée exclusivement pour les segments actifs (15, 15a, 15b), les schémas de commande étant déterminés selon au moins une condition aux limites relative à l'aspect du feu extérieur (4) et/ou limitant la détermination des schémas de commande,
le respect d'au moins une valeur de luminosité totale fixe de tous les segments (15, 15a, 15b) activés en mode lumineux sur la séquence temporelle étant utilisé en tant qu'au moins l'une de la ou des conditions aux limites, et la modification sur les pas de temps (17) d'un intervalle de commutation (16) s'effectuant de telle sorte que les augmentations et les diminutions de luminosité se compensent.

2. Procédé selon la revendication 1,
**caractérisé**
**en ce qu'**au moins une étendue géométrique prédéfinie de l'aspect géométrique du groupe dynamique, défini par les segments (15, 15a, 15b) activés en mode lumineux, est utilisée en tant qu'au moins une condition aux limites supplémentaire.

3. Procédé selon la revendication 1 ou 2,
**caractérisé**
**en ce qu'**au moins une condition aux limites supplémentaire décrit un nombre minimal et/ou un nombre maximal et/ou un nombre fixe de segments (15, 15a, 15b) à activer en mode lumineux et/ou à activer en mode lumineux variable dans le groupe dynamique et/ou une luminosité minimale et/ou une luminosité maximale de segments (15, 15a, 15b) à activer en mode lumineux et/ou un incrément de luminosité minimal et/ou maximal et/ou défini d'un schéma de commande au suivant et/ou une définition de segments (15, 15a, 15b) à activer avec une luminosité constante.

4. Procédé selon l'une des revendications précédentes, **caractérisé**
**en ce que** plusieurs groupes dynamiques disjoints, en particulier spatialement contigus, d'un feu extérieur (4) sont utilisés avec des conditions aux limites différentes, en particulier des groupes dynamiques orientés vers différents côtés du véhicule automobile (1).

5. Procédé selon la revendication 4,
**caractérisé**
**en ce qu'**au moins une condition aux limites commune est également utilisée pour au moins deux des multiples groupes dynamiques d'un feu extérieur (4).

6. Procédé selon l'une des revendications précédentes, **caractérisé**
**en ce que** la modification de la luminosité à l'intérieur de l'intervalle de commutation (16) s'effectue de manière temporellement monotone croissante et/ou décroissante et/ou selon un incrément fixe prédéfini en tant que condition aux limites.

7. Procédé selon l'une des revendications précédentes, **caractérisé**
**en ce que** les augmentations et les diminutions de luminosité se compensent respectivement pour une paire de segments actifs (15, 15a, 15b).

8. Procédé selon l'une des revendications précédentes, **caractérisé**
**en ce que**, comme point de départ pour un premier pas de temps (17) d'un intervalle de commutation (16) suivant, au moins pour les segments (15, 15a, 15b) désormais actifs, en particulier pour tous les segments (15, 15a, 15b) du groupe dynamique, les luminosités utilisées dans le dernier pas de temps (17) de l'intervalle de commutation (16) précédent sont utilisées, ou bien, pour chaque intervalle de commutation (16), en particulier au moins pour les segments actifs (15, 15a, 15b), de nouvelles luminosités sont déterminées de manière pseudorandomisée ou randomisée comme point de départ.

9. Procédé selon l'une des revendications précédentes, **caractérisé**
**en ce que**, dans au moins l'un du ou des modes de fonctionnement dynamiques, le dispositif de commande (3) commande les segments (15, 15a, 15b) selon des pas de temps (17) successifs, un intervalle de commutation (16) étant défini comme comprenant plusieurs pas de temps (17), et, pour chaque intervalle de commutation (16), un schéma de commande étant déterminé de manière pseudorandomisée ou randomisée avec un premier sous-groupe des segments (15, 15a, 15b) du groupe dynamique comprenant des segments (15, 15a, 15b) éteints, non activés en mode lumineux pendant l'intervalle de commutation (16), et un deuxième sous-groupe comprenant des segments (15, 15a, 15b) allumés, devant être activés en mode lumineux pendant l'intervalle de commutation.

10. Procédé selon la revendication 9,
**caractérisé**
**en ce que** les luminosités des segments (15, 15a, 15b) allumés sont également choisies de manière respectivement pseudorandomisée ou randomisée pour chaque intervalle de commutation (16), et/ou **en ce que** l'allumage et/ou l'extinction des segments (15, 15a, 15b) allumés s'effectue progressivement jusqu'à une luminosité maximale, respectivement à partir de la luminosité maximale, sur plusieurs pas de temps (17) de l'intervalle de commutation (16).

11. Procédé selon l'une des revendications précédentes, **caractérisé**
**en ce que**, dans au moins l'un du ou des modes de fonctionnement dynamiques, le dispositif de commande (3) commande la luminosité de segments (15, 15a, 15b) choisis de manière pseudorandomisée et/ou randomisée, devant être activés en mode lumineux variable, selon au moins deux impulsions triangulaires (25, 26) décalées temporellement l'une par rapport à l'autre, en particulier de telle sorte qu'une valeur de luminosité totale fixe pour le groupe dynamique soit maintenue par le décalage des impulsions triangulaires (25, 26).

12. Procédé selon l'une des revendications précédentes, **caractérisé**
**en ce que** les segments (15, 15a, 15b) sont formés par une OLED segmentée (12, 24) du feu extérieur (4) et/ou par au moins une matrice de LED du feu extérieur (4), et/ou **en ce qu'**au moins l'un du ou des feux extérieurs (4) est un feu arrière (5) et/ou un feu de circulation de jour (6), et/ou **en ce que** tous les segments (15, 15a, 15b) présentent une même luminance et/ou caractéristique de rayonnement.

13. Procédé selon l'une des revendications précédentes, **caractérisé**
**en ce que** le mode de fonctionnement dynamique est utilisé lorsque le véhicule à moteur (1) est à l'arrêt et/ou lorsque le véhicule à moteur (1) est en cours de conduite et/ou **en ce qu'**au moins l'un du ou des modes de fonctionnement dynamiques indique un état de fonctionnement du véhicule à moteur (1), en particulier un mode de conduite au moins partiellement autonome et/ou l'activité d'un système d'aide à la conduite déterminé.

14. Procédé selon l'une des revendications précédentes, **caractérisé**
**en ce qu'**en plus du ou des groupes dynamiques, on utilise au moins un groupe statique comprenant au moins un segment (15, 15a, 15b) disjoint du ou des groupes dynamiques, dont les segments (15, 15a, 15b) sont allumés de manière permanente ou éteints de manière permanente.

15. Procédé selon la revendication 14,
**caractérisé**
**en ce qu'**au moins l'un du ou des groupes statiques comprend des segments (15, 15a, 15b) toujours allumés, indiquant le bord de la surface lumineuse (14), en particulier les coins de celle-ci.

16. Procédé selon l'une des revendications précédentes, **caractérisé**
**en ce que** le dispositif d'éclairage comprend deux feux extérieurs (4) associés l'un à l'autre, disposés en particulier de manière symétrique par rapport à au moins un axe de symétrie et/ou spatialement adjacents, comprenant des groupes dynamiques correspondants pour lesquels des schémas de commande communs sont déterminés.

17. Procédé selon la revendication 16,
**caractérisé**
**en ce que** les deux feux extérieurs (4) associés l'un à l'autre sont prévus de manière symétrique sur un côté du véhicule à moteur (1), les schémas de commande étant déterminés de manière symétrique dans un miroir de telle sorte que les apparences qui en résultent soient symétriques par rapport au centre du véhicule du côté respectif.

18. Dispositif d'éclairage (2) pour un véhicule à moteur (1), le dispositif d'éclairage (2) comportant au moins un feu extérieur (4) et un dispositif de commande (3), le feu extérieur (4) présentant une surface lumineuse comportant plusieurs segments (15, 15a, 15b) pouvant être commandés indépendamment et comprenant respectivement au moins une source lumineuse,
**caractérisé**
**en ce que** le dispositif de commande (3) est conçu pour mettre en œuvre un procédé selon l'une des revendications précédentes.

19. Véhicule à moteur (1) présentant un dispositif d'éclairage (2) selon la revendication 18.
